(19) Europäisches Patentamt
European Patent Office
Office européen des brevets

(11) **EP 4 633 132 A1**

(12) **EUROPEAN PATENT APPLICATION**
published in accordance with Art. 153(4) EPC

(43) Date of publication:
**15.10.2025 Bulletin 2025/42**

(21) Application number: 23902370.8

(22) Date of filing: **09.11.2023**

(51) International Patent Classification (IPC):
**H04N 13/305** (2018.01)    **G09G 3/34** (2006.01)
**G09F 9/33** (2006.01)    **G02B 30/27** (2020.01)

(52) Cooperative Patent Classification (CPC):
**G02B 30/28; G02B 30/29; G09G 3/34;**
**H04N 13/305;** G02B 30/27; G09F 9/33

(86) International application number:
**PCT/CN2023/130618**

(87) International publication number:
**WO 2024/125170 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.12.2022  CN 202211601713**

(71) Applicant: **Beijing Shiyan Technology Co., Ltd.**
**Beijing 100176 (CN)**

(72) Inventors:
• **GAO, Jian**
**Beijing 100176 (CN)**

• **DONG, Xue**
**Beijing 100176 (CN)**
• **HONG, Tao**
**Beijing 100176 (CN)**
• **PENG, Kuanjun**
**Beijing 100176 (CN)**
• **WU, Zhongyuan**
**Beijing 100176 (CN)**
• **WANG, Tieshi**
**Beijing 100176 (CN)**
• **LI, Xiaolong**
**Beijing 100176 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **DISPLAY DEVICE**

(57)    The present disclosure provides a display device, for use in eliminating moiré patterns. The display device comprises: a display panel, comprising: pixel repeating units, each pixel repeating unit comprising a plurality of pixel islands, each pixel island comprising a plurality of sub-pixels, and the plurality of pixel repeating units comprising a plurality of pixel repeating unit rows; and a light splitting assembly, comprising a plurality of light splitting repeating units extending in the column direction and continuously arranged in the row direction, the light splitting repeating units comprising M light splitting structures extending in the column direction and continuously arranged in the row direction, each light splitting repeating unit corresponding to N columns of sub-pixels in the pixel repeating unit rows, M and N being both integers greater than 1, the light splitting structures having convergence center lines extending in the column direction, and the distance between the convergence center lines of two adjacent light splitting structures being a first distance. At least some of the sub-pixels in two adjacent pixel repeating unit rows are arranged in a staggered manner in the row direction, and/or at least some of a plurality of first distances corresponding to the M light splitting structures are not equal.

EP 4 633 132 A1

Processed by Luminess, 75001 PARIS (FR)

**(Cont. next page)**

FIG. 1

## Description

### CROSS-REFERENCE TO RELATED APPLICATIONS

The present disclosure claims priority to the Chinese patent application No. 202211601713.4, filed with China National Intellectual Property Administration on December 13, 2022, and entitled "Display Device", the entire contents of which are incorporated by reference into the present disclosure.

### Technical Field

The present disclosure relates to the field of display technology, and in particular to a display device.

### Background

With the continuous development of display technology, three-dimensional (3D) display technology has attracted more and more attention. Three-dimensional display technology can make the display image stereoscopic and realistic. Its principle lies in that the left and right eyes of a person receive the left eye image and the right eye image with a certain parallax respectively, and when the two images with the parallax are received by the left and right eyes of a person respectively, the image information is superimposed and fused through the brain to construct a 3D visual display effect. In order to achieve compatibility of super-multi-viewpoint 3D display with light field display, the traditional sub-pixels are made into a pixel island structure, each pixel island contains multiple sub-pixels. When the display information of multiple sub-pixels is different and when multiple viewpoints enter a single eye, ordinary light field display can be achieved. When the display information of multiple sub-pixels is different and a single viewpoint enters a single eye, super-multi-viewpoint light field 3D display can be achieved.

However, the 3D display products in the prior art have the problem of moiré pattern.

### Summary

Embodiments of the present disclosure provide a display device for eliminating a moiré pattern.

A display device provided by embodiments of the present disclosure includes: a display panel, including: a plurality of pixel repeating units arranged in an array along a row direction and a column direction; where each of the pixel repeating units includes a plurality of pixel islands arranged continuously in the column direction; each of the pixel islands includes a plurality of sub-pixels arranged at intervals along the row direction; and the plurality of pixel repeating units include a plurality of pixel repeating unit rows arranged along the column direction; and a light-splitting component, located on a display side of the display panel; where the light-splitting component includes a plurality of light-splitting repeating units extending along the column direction and arranged continuously along the row direction; the light-splitting repeating unit includes M light-splitting structures extending along the column direction and arranged continuously along the row direction; each of the light-splitting repeating units corresponds to N columns of sub-pixels in the pixel repeating unit rows; M and N are both integers greater than 1; and the light-splitting structure has a convergence center line extending along the column direction, and a distance between the convergence center lines of two light-splitting structures that are adjacent to each other is a first distance; where at least some sub-pixels in two the pixel repeating unit rows that are adjacent to each other are misaligned in the row direction; and/or, at least some of the multiple first distances are not equal.

In some embodiments, the light-splitting repeating units are evenly divided into M sub-regions, the sub-regions correspond one-to-one to the light-splitting structures, and the sub-region has a first symmetry axis extending along the column direction; and in the row direction, a width of the light-splitting repeating unit is equal to a width of the N columns of sub-pixels in the pixel repeating unit rows.

In some embodiments, each of the pixel islands includes n sub-pixels arranged at intervals along the row direction; where n is an integer greater than 1; the sub-pixel includes a sub-pixel opening region; and in the row direction, a ratio of a total width of n sub-pixel opening regions to a width of the pixel island is greater than or equal to 0.9/M and less than or equal to 1.

In some embodiments, in the row direction, a ratio of the total width of the n sub-pixel opening regions to the width of the pixel island is i/M; where i is an integer greater than or equal to 1 and less than or equal to M-1.

In some embodiments, in the light-splitting repeating unit, a ratio of a misalignment vector of the convergence center line of a j-th light-splitting structure relative to the first symmetry axis in the row direction to a width of the sub-pixel in the row direction is $Vj = \pm C\frac{E}{M}$, where j is an integer greater than or equal to 1 and less than or equal to M, C is an integer greater than 0, and E is an integer greater than or equal to 0 and less than M.

In some embodiments, C=1; and in each of the light-splitting repeating units, multiple Vj corresponding to the M light-splitting structures form an arithmetic progression, and a common difference of the arithmetic progression is 1/M.

In some embodiments, centers of the sub-pixels in a same one column in any two pixel repeating unit rows that are adjacent to each other are located on a same one straight line in the column direction.

In some embodiments, a ratio of a misalignment vector of the sub-pixels in at least one pixel repeating unit row relative to the first symmetry axis in the row direction to the width of the sub-pixel in the row direction is $Jj=\pm C\frac{1}{2M}$ .

In some embodiments, a ratio of a misalignment vector of the sub-pixels in a 2-nd pixel repeating unit row in the column direction relative to the first symmetry axis in the row direction to the width of the sub-pixel in the row direction is $Jj=\pm\frac{1}{2M}$ .

In some embodiments, the plurality of pixel repeating unit rows are divided into a plurality of pixel repeating unit groups, each of the pixel repeating unit groups including M pixel repeating unit rows; and in the pixel repeating unit group, a ratio of a misalignment vector of the sub-pixels in a j-th pixel repeating unit row relative to the first symmetry axis in the row direction to a width of the sub-pixel in the row direction is $Jj=\pm C\frac{E'}{M}$ , where j is an integer greater than or equal to 1 and less than or equal to M, C is an integer greater than 0, and E' is an integer greater than or equal to 0 and less than M.

In some embodiments, C=1; and in each of the pixel repeating unit groups, multiple Jj corresponding to the M pixel repeating unit rows form an arithmetic progression, and a common difference of the arithmetic progression is 1/M.

In some embodiments, the convergence center line coincides with the first symmetry axis.

In some embodiments, in each of the light-splitting repeating units, a ratio of a misalignment vector of the convergence center line of at least one structure relative to the first symmetry axis in the row direction to a width of the sub-pixel in the row direction is $Vj=\pm C\frac{1}{2M}$ .

In some embodiments, in each of the light-splitting repeating units, a ratio of a misalignment vector of the convergence center line of a 2-nd light-splitting structure relative to the first symmetry axis in the row direction to the width of the sub-pixel in the row direction is $Vj=\pm\frac{1}{2M}$ .

In some embodiments, each of the pixel islands includes n sub-pixels arranged at intervals along the row direction; where n is an integer greater than 1; the sub-pixel includes a sub-pixel opening region; and in the row direction, a ratio of a total width of n sub-pixel opening regions to a width of the pixel island is greater than or equal to 0.9/(M×M') and less than or equal to 1.

In some embodiments, in the row direction, a ratio of the total width of the n sub-pixel opening regions to the width of the pixel island is i/(M×M'); where i is an integer greater than or equal to 1 and less than or equal to M×M'-1.

In some embodiments, the plurality of pixel repeating unit rows are divided into a plurality of pixel repeating unit groups, each of the pixel repeating unit groups including M' pixel repeating unit rows; in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E''}{(M\times M')}$ ; and in the pixel repeating unit group, a ratio of a misalignment vector of the sub-pixels in a j'-th pixel repeating unit row relative to the first symmetry axis in the row direction to the width of the sub-pixel in the row direction is $Jj'=\pm C'\frac{E'''}{M'}$ ; where j is an integer greater than or equal to 1 and less than or equal to M, j' is an integer greater than or equal to 1 and less than or equal to M', C and C' are both integers greater than 0, E" is an integer greater than or equal to 0 and less than M, and E‴ is an integer greater than or equal to 0 and less than M'.

In some embodiments, in each of the light-splitting repeating units, multiple Vj corresponding to the M light-splitting structures form an arithmetic progression with a common difference being 1/(M×M'); and in each of the pixel repeating unit groups, multiple Jj' corresponding to the M' pixel repeating unit rows form an arithmetic progression with a common difference being 1/M'.

In some embodiments, the plurality of pixel repeating unit rows are divided into a plurality of pixel repeating unit groups, each of the pixel repeating unit groups including M' pixel repeating unit rows; in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E''}{M}$ ; and in the pixel repeating unit group, a ratio of a misalignment vector of the sub-pixels in a j'-th pixel repeating unit row relative to the first symmetry axis in the row direction to the width of the sub-pixel in the row direction is $Jj'=\pm C'\frac{E'''}{(M\times M')}$ ; where, j is an integer greater than or equal to 1 and less than or equal to M, j' is an integer greater than or equal to 1 and less than or equal to M', C and C' are both integers greater than 0, E" is an integer greater than or equal to 0 and less than M, and E‴ is an integer greater than or equal to 0 and less than M'.

In some embodiments, in each of the light-splitting repeating units, multiple Vj corresponding to the M light-splitting structures form an arithmetic progression with a common difference being 1/M; and in each of the pixel repeating unit groups, multiple Jj corresponding to the M' pixel repeating unit rows form an arithmetic progression with a common difference being 1/(M×M').

In some embodiments, the plurality of pixel repeating unit rows are divided into a plurality of pixel repeating unit groups, each of the pixel repeating unit groups including M' pixel repeating unit rows; in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E''}{(M\times M')}$; and a ratio of a misalignment vector of the sub-pixels in the pixel repeating unit row of at least one of the plurality of pixel repeating unit groups relative to the first symmetry axis in the row direction to the width of the sub-pixel in the row direction is $Jj'=\pm C'\frac{E''''}{2(M\times M')}$, and a ratio of a misalignment vector of the sub-pixels in the pixel repeating unit rows of remaining pixel repeating unit groups of the plurality of pixel repeating unit groups relative to the first symmetry axis in the row direction to the width of the sub-pixel in the row direction is $Jj'=\pm C'\frac{E'''}{M'}$; or, in two light-splitting repeating units that are adjacent to each other, a ratio of a misalignment vector of the convergence center line of a j-th light-splitting structure of one light-splitting repeating unit relative to the first symmetry axis in the row direction to a width of the sub-pixel in the row direction is $Vj=\pm C\frac{E''}{(M\times M')}$, and a ratio of a misalignment vector of the convergence center line of a j-th light-splitting structure of another light-splitting repeating unit relative to the first symmetry axis in the row direction to the width of the sub-pixel in the row direction is $Vj=\pm C\frac{E''''}{2(M\times M')}$; and in the pixel repeating unit group, a ratio of a misalignment vector of the sub-pixels in the pixel repeating unit row relative to the first symmetry axis in the row direction to the width of the sub-pixel in the row direction is $Jj'=\pm C'\frac{E'''}{M'}$; where, j is an integer greater than or equal to 1 and less than or equal to M, j' is an integer greater than or equal to 1 and less than or equal to M', C and C' are both integers greater than 0, E" is an integer greater than or equal to 0 and less than M, E''' is an integer greater than or equal to 0 and less than M', and E'''' is an integer greater than 0 and less than 2(M×M').

In some embodiments, the plurality of pixel repeating unit rows are divided into a plurality of pixel repeating unit groups, each of the pixel repeating unit groups including M' pixel repeating unit rows; in two light-splitting repeating units that are adjacent to each other, a ratio of a misalignment vector of the convergence center line of the light-splitting structure of one light-splitting repeating unit relative to the first symmetry axis in the row direction to a width of the sub-pixel in the row direction is $Vj=\pm C\frac{E''}{M}$, and a ratio of a misalignment vector of the convergence center line of the light-splitting structure of another light-splitting repeating unit relative to the first symmetry axis in the row direction to the width of the sub-pixel in the row direction is $Vj=\pm C\frac{E''''}{2(M\times M')}$; and in the pixel repeating unit group, a ratio of a misalignment vector of the sub-pixels in a j'-th pixel repeating unit row relative to the first symmetry axis in the row direction to the width of the sub-pixel in the row direction is $Jj'=\pm C'\frac{E'''}{(M\times M')}$; or, a ratio of a misalignment vector of the convergence center line of the light-splitting structure of the light-splitting repeating unit relative to the first symmetry axis in the row direction to a width of the sub-pixel in the row direction is $Vj=\pm C\frac{E''}{M}$; and in the plurality of pixel repeating unit groups, a ratio of a misalignment vector of the sub-pixels in a j'-th pixel repeating unit row of at least one of the plurality of pixel repeating unit groups relative to the first symmetry axis in the row direction to the width of the sub-pixel in the row direction is

$Jj'=\pm C'\frac{E''''}{2(M\times M')}$, and a ratio of a misalignment vector of the sub-pixels in the j'-th pixel repeating unit rows of remaining pixel repeating unit groups relative to the first symmetry axis in the row direction to the width of the sub-pixel in the row direction is $Jj'=\pm C'\frac{E'''}{(M\times M')}$; where, j is an integer greater than or equal to 1 and less than or equal to M, j' is an integer greater than or equal to 1 and less than or equal to M', C and C' are both integers greater than 0, E" is an integer greater than or equal to 0 and less than M, E''' is an integer greater than or equal to 0 and less than M', and E'''' is an integer greater than 0 and less than 2(M×M').

In some embodiments, widths of multiple light-splitting structures included in the light-splitting component in the row direction are all the same; and a distance between any two light-splitting structures that are adjacent to each other in the row direction is greater than 0.

In some embodiments, the light-splitting component further includes a light- shielding portion between the light-splitting structures.

In some embodiments, N/M is an integer.

In some embodiments, each of the light-splitting repeating units corresponds to K columns of pixel islands in the pixel repeating unit rows, where K is an integer greater than 1, and K/M is an integer.

In some embodiments, a distance between any two light-splitting structures that are adjacent to each other in the row direction is equal to 0.

In some embodiments, M and N are mutually prime.

In some embodiments, each of the light-splitting repeating units corresponds to K columns of pixel islands in the pixel repeating unit rows, where K is an integer greater than 1, and M/K is an integer.

In some embodiments, the light-splitting structure is one of the following: a geometric lens, a diffraction lens, a liquid crystal lens, or a liquid lens.

**Brief Description of Figures**

In order to more clearly illustrate the technical solutions in the embodiments of the present disclosure, the drawings required for use in the description of the embodiments will be briefly introduced below. Obviously, the drawings described below are only some embodiments of the present disclosure. For ordinary technicians in this field, other drawings can be obtained based on these drawings without paying any creative work.

FIG. 1 is a schematic structural diagram of a display device provided by embodiments of the present disclosure.

FIG. 2 is a light path diagram of light emitted by sub-pixels of a display device provided by embodiments of the present disclosure.

FIG. 3 is a light path diagram of light emitted by sub-pixels that are spliced together of a display device provided by embodiments of the present disclosure.

FIG. 4 is a light path diagram of light emitted by sub-pixels of another display device provided by embodiments of the present disclosure.

FIG. 5 is a light path diagram of light emitted by sub-pixels that are spliced together of another display device provided by embodiments of the present disclosure.

FIG. 6 is a schematic diagram of a sub-pixel superposition angular spectrum provided by embodiments of the present disclosure.

FIG. 7 is a schematic diagram of another sub-pixel superposition angular spectrum provided by embodiments of the present disclosure.

FIG. 8 is a schematic diagram of a relationship of a sub-pixel opening width deviation with a moiré pattern intensity provided by embodiments of the present disclosure.

FIG. 9 is a schematic structural diagram of another display device provided by embodiments of the present disclosure.

FIG. 10 is a schematic diagram of yet another sub-pixel superposition angular spectrum provided by embodiments of the present disclosure.

FIG. 11 is a schematic diagram of yet another sub-pixel superposition angular spectrum provided by embodiments of the present disclosure.

FIG. 12 is a schematic diagram of another relationship of a sub-pixel opening width deviation with a moiré pattern intensity provided by embodiments of the present disclosure.

FIG. 13 is a schematic structural diagram of yet another display device provided by embodiments of the present disclosure.

FIG. 14 is a schematic structural diagram of yet another display device provided by embodiments of the present disclosure.

FIG. 15 is a schematic structural diagram of yet another display device provided by embodiments of the present disclosure.

FIG. 16 is a schematic structural diagram of yet another display device provided by embodiments of the present disclosure.

FIG. 17 is a schematic structural diagram of yet another display device provided by embodiments of the present disclosure.

FIG. 18 is a schematic structural diagram of yet another display device provided by embodiments of the present disclosure.

FIG. 19 is a schematic structural diagram of yet another display device provided by embodiments of the present disclosure.

FIG. 20 is a schematic structural diagram of yet another display device provided by embodiments of the present disclosure.

FIG. 21 is a schematic structural diagram of yet another display device provided by embodiments of the present disclosure.

FIGS. 22A to 22C are diagrams of a sub-pixel emitted light angular spectrum provided by embodiments of the present disclosure.

FIG. 23 is a schematic structural diagram of yet another display device provided by embodiments of the present disclosure.

FIG. 24 is a schematic structural diagram of yet another display device provided by embodiments of the present disclosure.

FIG. 25 is a schematic structural diagram of yet another display device provided by embodiments of the present disclosure.

FIG. 26 is a schematic structural diagram of yet another display device provided by embodiments of the present disclosure.

FIG. 27 is a schematic structural diagram of yet another display device provided by embodiments of the present disclosure.

FIG. 28 is a schematic structural diagram of yet another display device provided by embodiments of the present disclosure.

## Detailed Description

In order to make the purpose, technical solution and advantages of the embodiments of the present disclosure clearer, the technical solution of the embodiments of the present disclosure will be clearly and completely described below in conjunction with the drawings of the embodiments of the present disclosure. Obviously, the described embodiments are part of the embodiments of the present disclosure, not all of the embodiments. Addtionally, in the absence of conflict, the embodiments in the present disclosure and the features in the embodiments can be combined with each other. Based on the described embodiments of the present disclosure, all other embodiments obtained by ordinary technicians in the field without creative work are within the claimed scope of the present disclosure.

Unless otherwise defined, the technical terms or scientific terms used in the present disclosure should be understood by people with ordinary skills in the field to which the present disclosure belongs. "First", "second" and similar words used in the present disclosure do not indicate any order, quantity or importance, but are only used to distinguish different components. "Include" or "comprise" and similar words mean that the elements or objects appearing before the word cover the elements or objects listed after the word and their equivalents, without excluding other elements or objects. "Connect" or "couple" and similar words are not limited to physical or mechanical connections, but may include electrical connections, whether direct or indirect.

It should be noted that the sizes and shapes of the figures in the accompanying drawings do not reflect the actual proportions, and are only intended to illustrate the present disclosure. The same or similar reference numerals throughout represent the same or similar elements or elements having the same or similar functions.

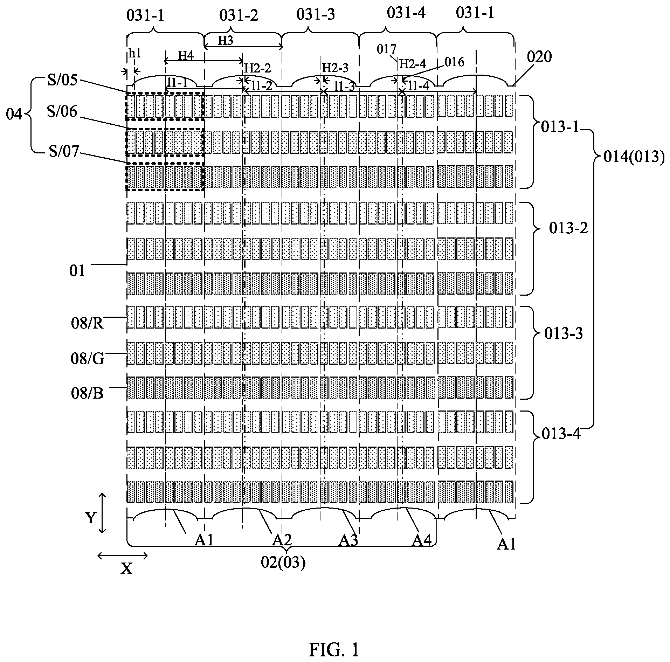

The present disclosure provides a display device, as shown in FIG. 1, including: a display panel 01, and a light-splitting component 02.

The display panel 01 includes: a plurality of pixel repeating units 04 arranged in an array along a row direction X and a column direction Y. Each pixel repeating unit 04 includes a plurality of pixel islands S arranged continuously in the column direction. Each pixel island S includes a plurality of sub-pixels 08 arranged at intervals along the row direction X. The plurality of pixel repeating units 04 include a plurality of pixel repeating unit rows 013 arranged along the column direction Y.

The light-splitting component 02 is located on a display side of the display panel 01. The light-splitting component 02 includes a plurality of light-splitting repeating units 03 extending along the column direction Y and arranged continuously along the row direction X. The light-splitting repeating unit 03 includes M light-splitting structures A extending along the column direction Y and arranged continuously along the row direction X. Each light-splitting repeating unit 03 corresponds to N columns of sub-pixels in the pixel repeating unit row(s). M and N are both integers greater than 1. The light-splitting structure A has a convergence center line 016 extending along the column direction Y, and a distance between the convergence center lines 016 of two adjacent light-splitting structures A is a first distance 11.

At least some sub-pixels 08 in two adjacent pixel repeating unit rows 013 are misaligned in the row direction X, and/or, among at least some of the multiple first distances I1 corresponding to the M light-splitting structures A are not equal.

It should be noted that the sub-pixels in two adjacent pixel repeating unit rows are misaligned in the row direction, which means that centers of the sub-pixels in two adjacent pixel repeating unit rows are not on a straight line in the column direction.

It should be noted that in the related art, when a single pixel repeating unit row constitutes a repeating unit of a pixel repeating unit row arrangement, that is, when the centers of the sub-pixels in two adjacent pixel repeating unit rows are on a straight line in the column direction, there may be a "black region" in space after the light rays emitted by the N columns of sub-pixels are split by the M light-splitting structures above them. When the first distances corresponding to all the light-splitting structures included in the light-splitting component are equal, that is, when a single light-splitting structure constitutes a repeating unit of a light-splitting structure arrangement, there may also be a "black region" in space after the light rays emitted by the N columns of sub-pixels are split by the M light-splitting structures above them.

In the display device provided by the embodiments of the present disclosure, at least some sub-pixels in two adjacent pixel repeating unit rows are arranged in a misaligned manner in the row direction, and/or at least some of the first distances are not equal, so that a single pixel repeating unit row does not constitute a repeating unit of the pixel repeating unit row arrangement, and/or a single light-splitting structure does not constitute a repeating unit of the light-splitting structure arrangement. Compared with the case where the sub-pixels are not arranged in a misaligned manner or the light-splitting structures are not arranged in a misaligned manner, the "black region" in space after the light rays emitted by the N columns of sub-pixels are split by the M light-splitting structures above them can be blocked, thereby preventing the human eyes from seeing the "black region" when moving in the visible space, and can alleviate the problem of macroscopic moiré pattern.

It should be noted that each light-splitting repeating unit corresponds to the N columns of sub-pixels in the pixel repeating unit rows, which means that an orthographic projection of each light-splitting repeating unit on a plane where the display panel is located overlaps with an orthographic projection of the N columns of sub-pixels in the pixel repeating unit rows on the plane where the display panel is located. Since the sub-pixels in any two adjacent pixel repeating unit rows are misaligned in the row direction, for example, for some pixel repeating unit rows, the orthographic projection of the light-splitting repeating unit on the plane where the display panel is located completely covers the orthographic projection of the N columns of sub-pixels in these pixel repeating unit rows on the plane where the display panel is located. For the remaining pixel repeating unit rows, the orthographic projection of the light-splitting repeating unit on the plane where the display panel is located does not completely cover the orthographic projection of the N columns of sub-pixels in these pixel repeating unit rows on the plane where the display panel is located, and for the sub-pixels located at the edge of the light-splitting repeating unit, the orthographic projection of the light-splitting repeating unit on the plane where the display panel is located only covers a partial region of the orthographic projection of these sub-pixels on the plane where the display panel is located.

It should be noted that the display device provided by the embodiments of the present disclosure can be applied to three-dimensional (3D) display, and can also realize switching between 3D and 2D display. The pixel island can be used as a meta-pixel of 2D display. Since a pixel island includes multiple sub-pixels, the same resolution as 2D display can be maintained in 3D display mode. Combined with the eye-tracking system, multi-viewpoint display with a large viewing angle can be realized, and 3D display with a higher pixel density (ppi) can be realized, with a larger amount of information and lower color crosstalk between adjacent viewpoints.

In a specific implementation, the light-splitting structure is used to control the light-emitting angle of each sub-pixel so that it emits light in a direction. In some embodiments, the light-splitting structure is a cylindrical lens. The cylindrical lens may, for example, include a first resin layer having protrusions, and a planarization resin layer located on a side of the first resin layer away from the display panel. Alternatively, other settings may be used to implement the cylindrical lens function. In some embodiments, the light-splitting structure is one of the following: a geometric lens, a diffraction lens, a liquid crystal lens, or a liquid lens.

It should be noted that when the light-splitting structure is a cylindrical lens, no matter what cylindrical lens implementation method is used, the cylindrical lens extends in the column direction, and the orthographic projection of the focus of the cylindrical lens on the plane where the display panel is located falls into the orthographic projection of the convergence center line on the plane where the display panel is located. When the widths of multiple light-splitting structures in the row direction are equal, the convergence center line is the symmetry axis of the light-splitting structure extending in the column direction.

In a specific implementation, the display panel can be one of a liquid crystal display panel (LCD), an organic light-emitting diode (OLED) display panel, a quantum dot light-emitting diode (QLED), a micro inorganic light-emitting diode (micro LED) display panel, and a mini light-emitting diode (mini LED) display panel.

In some embodiments, as shown in FIG. 1, a pixel repeating unit 04 includes three pixel islands S arranged continuously in the column direction Y.

In a pixel repeating unit 04, the colors displayed by the sub-pixels 08 in the same one pixel island S are the same, and the colors displayed by the sub-pixels 08 in different pixel islands S are different.

In some embodiments, as shown in FIG. 1, a pixel repeating unit 04 includes: a first pixel island 05, a second pixel island 06, and a third pixel island 07. The first pixel island 05 includes a plurality of red sub-pixels R, the second pixel island 06 includes a plurality of green sub-pixels G, and the third pixel island 07 includes a plurality of blue sub-pixels B.

In some embodiments, as shown in FIG. 1, the colors displayed by the sub-pixels 08 in a row of pixel islands S are the same.

In some embodiments, as shown in FIG. 1, the light-splitting repeating unit 03 is evenly divided into M sub-regions 031, the sub-regions 031 correspond one-to-one to the light-splitting structures A, and each sub-region 031 has a first symmetry axis 017 extending along the column direction Y. In the row direction X, a width of the light-splitting repeating unit 03 is equal to a width of the N columns of sub-pixels 08 in the pixel repeating unit row 013.

It should be noted that, as shown in FIG. 1, the light-splitting repeating unit 03 is evenly divided into M sub-regions 031, which means that in the row direction X, the widths H3 of the sub-regions 031 are equal, the distances H4 between the first symmetry axes 017 adjacent to one another are equal, and the width H3 of each sub-region 031 is equal to the distance H4 between adjacent first symmetry axes 017. The width of the light-splitting repeating unit 03 is M×H3.

In some embodiments, each pixel island includes n sub-pixels arranged at intervals along the row direction, where n is an integer greater than 1. The sub-pixel includes a sub-pixel opening region. In the row direction, a ratio of a total width of n sub-pixel opening regions to a width of the pixel island is greater than or equal to 0.9/M and less than or equal to 1.

In some embodiments, in the row direction, a ratio of the total width of the n sub-pixel opening regions to the width of the pixel island is i/M, where i is an integer greater than or equal to 1 and less than or equal to M-1.

In some embodiments, the light rays emitted by the light-emitting regions of N columns of sub-pixels in the pixel repeating unit rows that are split by M light-splitting structures form a continuous light-emitting region in space.

In the display device provided by the embodiments of the present disclosure, N columns of sub-pixels correspond to M light-splitting structures, and the light-emitting regions of the sub-pixels in the N columns of sub-pixels are misaligned in space. Since the size of the light-splitting structure in the row direction is relatively small, for the N columns of sub-pixels corresponding to the M light-splitting structures, the human eyes cannot distinguish which light-splitting structure the light is emitted from. Therefore, to the human eyes, the light rays emitted by the N columns of sub-pixels that are split by the M light-splitting structures above them forms a continuous light-emitting region in space, and the human eyes will not see a "black region" when moving in the visible space.

In some embodiments, the sub-pixel includes a sub-pixel opening region. In the row direction, the ratio of the total width of the n sub-pixel opening regions to the width of the pixel island is greater than or equal to 0.9/M and less than or equal to 1. That is, the opening ratio of the sub-pixel in the pixel island is greater than or equal to 0.9/M and less than or equal to 1.

In some embodiments, in the row direction, the light-emitting regions of N columns of sub-pixels in the pixel repeating unit rows are spatially complementary and spliced.

In some embodiments, when i=1, that is, in the row direction, the ratio of the width of the sub-pixel opening regions to the width of the pixel island is 1/M. That is, the opening ratio of the sub-pixel in the pixel island is 1/M. In this way, the sub-pixels under each light-splitting repeating unit can be arranged in a misaligned and complementary manner relative to the position of the corresponding light-splitting structure, so that the light-emitting regions of N columns of sub-pixels are spatially complementary and spliced, that is, the light paths of the viewpoints are closely connected, which can alleviate macroscopic moiré pattern and improve the display effect.

Of course, it is also possible that, in the row direction, the light-emitting regions of the N columns of sub-pixels in the pixel repeating unit row overlap with one another in space.

In some embodiments, when i is greater than 1 and less than or equal to M-1, in the row direction, the light-emitting regions of the N columns of sub-pixels in the pixel repeating unit row uniformly overlap in space.

In some embodiments, in the light-splitting repeating unit, a ratio of a misalignment vector H2-j of the convergence center line of the j-th light-splitting structure relative to the first symmetry axis in the row direction to the width h1 of the sub-pixel in the row direction is $Vj=\pm C\frac{E}{M}$, where j is an integer greater than or equal to 1 and less than or equal to M, C is an integer greater than 0, and E is an integer greater than or equal to 0 and less than M. In the light-splitting repeating unit, Vj corresponding to the M light-splitting structures are not equal.

In the display device provided by the embodiments of the present disclosure, the Vj corresponding to the M light-splitting structures in the light-splitting repeating unit are not equal, that is, the misalignment vectors of the convergence center lines relative to the first symmetry axes in the row direction are not equal, so that a single light-splitting structure does not constitute a repeating unit of an arrangement of multiple light-splitting structures, and avoids the black region in the light-emitting region formed in space by the light emitted by the sub-pixels that is split by the M light-splitting structures when a single light-splitting structure constitutes a repeating unit of an arrangement of multiple light-splitting structures. That is, in the embodiments of the present disclosure, a region corresponding to the M light-splitting structures is used as a repeating unit, and the light rays emitted from this region forms a continuous light-emitting region in space, and the brightness of this region is the same at all viewing angles, so the human eyes will not see the "black region" when moving in the visible space, which can alleviate the problem of macroscopic moiré pattern.

It should be noted that, taking the row direction X shown in FIG. 1 as an example, the row direction X is the left-right extending direction in the figure. The convergence center line of the j-th light-splitting structure may be misaligned to the right relative to the first symmetry axis in the row direction. In this case, H2-j is positive, and $Vj=+C\frac{E}{M}$. Alternatively, the convergence center line of the j-th light-splitting structure may be misaligned to the left relative to the first symmetry axis in the row direction. In this case, H2-j is negative, and $Vj = -C\frac{E}{M}$.

In some embodiments, Vj corresponding to the j-th light-splitting structures in different light-splitting repeating units are all equal.

In some embodiments, in a light-splitting repeating unit, C in Vj corresponding to each light-splitting structure is equal.

In some embodiments, in a light-splitting repeating unit, Vj corresponding to one light-splitting structure is 0, and Vj corresponding to the remaining light-splitting structures are not 0, and Vj corresponding to the remaining light-splitting structures are not equal.

In some embodiments, N/M is an integer.

When N/M is an integer, in some embodiments, each light-splitting repeating unit corresponds to K columns of pixel islands in the pixel repeating unit row, K is an integer greater than 1, and K/M is an integer.

In the specific implementation, as shown in FIG. 1, M=4, K=4, n=8, N=K*n=32. The 4 light-splitting structures are A1, A2, A3, and A4. Each light-splitting repeating unit includes 4 sub-areas 031-1, 031-2, 031-3, and 031-4, A1 corresponds to 031-1, A2 corresponds to 031-2, A3 corresponds to 031-3, and A4 corresponds to 031-4.

In a specific implementation, when M=4, Vj corresponding to the 4 light-splitting structures are selected from the following: $-C\frac{3}{4}, -C\frac{2}{4}, -C\frac{1}{4}, 0, C\frac{1}{4}, C\frac{2}{4}, C\frac{3}{4}$.

In some embodiments, C=1. In each light-splitting repeating unit, the multiple Vj corresponding to the M light-splitting structures form an arithmetic progression, and the common difference of the arithmetic progression is 1/M. Still taking M=4 as an example, in a specific implementation, Vj corresponding to the 4 light-splitting structures are selected 4 consecutive ones from the following: $\frac{3}{4}, -\frac{2}{4}, -\frac{1}{4}, 0, \frac{1}{4}, C\frac{2}{4}, C\frac{3}{4}$.

In a specific implementation, Vj corresponding to the 4 light-splitting structures are any one of the following combinations: (-3/4, -2/4, -1/4, 0), (-2/4, -1/4, 0, 1/4), (-1/4, 0, 1/4, 2/4), (0, 1/4, 2/4, 3/4). The Vj in the above combination can be randomly assigned to the 4 light-splitting structures. For example, the combination (0, 1/4, 2/4, 3/4) is selected, and there are a total of 24 cases of random assignment to the 4 light-splitting structures.

One of the cases is shown in FIG. 1, the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/4)h1 relative to the first symmetry axis 017 of the sub-region 031-2, that is, H2-2=(1/4)h1. The convergence center line 016 of the light-splitting structure A3 is misaligned to the right by (2/4)h1 relative to the first symmetry axis 017 of the sub-region 031-3, that is, H2-3=(2/4)h1. The convergence center line 016 of the light-splitting structure A4 is misaligned to the right by (3/4)h1 relative to the first symmetry axis 017 of the sub-region 031-4, that is, H2-4(3/4)h1. The first distance between adjacent light-splitting structures A1 and A2 is L1-1, the first distance between adjacent light-splitting structures A2 and A3 is L1-2, the first distance between adjacent light-splitting structures A3 and A4 is L1-3, and the first distance between adjacent light-splitting structures A4 and A1 is L1-4. L1-1, L1-2, L1-3, and L1-4 are not completely equal, L1-1 = H3 + (1/4)h1 = L1-2 = L1-3, and L1-4 = H3 - (3/4)h1.

It should be noted that in FIG. 1, n=8 is taken as an example to illustrate the distance. In a specific implementation, it can also be: M=4, K=4, and n=16. Vj of 4 light-splitting structures that is (0, 1/4, 2/4, 3/4) is still taken as an example for illustration.

Solution 1: The convergence center line of the light-splitting structure A1 is not misaligned relative to the first symmetry axis of its corresponding sub-region. The convergence center line of the light-splitting structure A2 is misaligned to the right by (1/4)h1 relative to the first symmetry axis of its corresponding sub-region. The convergence center line of the light-splitting structure A3 is misaligned to the right by (2/4)h1 relative to the first symmetry axis of its corresponding sub-region. The convergence center line of the light-splitting structure A4 is misaligned to the right by (3/4)h1 relative to the first symmetry axis of its corresponding sub-region. The first distance between adjacent light-splitting structures A1 and A2 is L1-1, the first distance between adjacent light-splitting structures A2 and A3 is L1-2, the first distance between adjacent light-splitting structures A3 and A4 is L1-3, and the first distance between adjacent light-splitting structures A4 and A1 is L1-4. The width of the pixel island in the row direction is 181.8 micrometers ($\mu$m), that is, H3=181.8$\mu$m, h1=11.3625$\mu$m, L1-1=H3 + (1/4)h1=L1-2=L1-3=184.640625$\mu$m, L1-4=H3 - (3/4)h1=173.278125$\mu$m.

Solution 2: The convergence center line of the light-splitting structure A1 is not misaligned relative to the first symmetry axis of its corresponding sub-region, the convergence center line of the light-splitting structure is misaligned to the right by (1/4)h1 relative to the first symmetry axis of its corresponding sub-region, the convergence center line of the light-splitting structure A3 is misaligned to the right by (3/4)h1 relative to the first symmetry axis of its corresponding sub-region, and the convergence center line of the light-splitting structure A4 is misaligned to the right by (2/4)h1 relative to the first symmetry axis of its corresponding sub-region. The first distance between adjacent light-splitting structures A1 and A2 is L1-1, the first distance between adjacent light-splitting structures A2 and A3 is L1-2, the first distance between adjacent light-splitting structures A3 and A4 is L1-3, and the first distance between adjacent light-splitting structures A4 and A1 is L1-4. The width of the pixel island in the row direction is 181.8 micrometers ($\mu$m), that is, H3=181.8$\mu$m, h1=11.3625$\mu$m, L1-1=H3 + (1/4)h1=184.640625$\mu$m, L1-2=H3 + (2/4)h1=187.48125$\mu$m, L1-3=H3 - (1/4)h1=178.959375$\mu$m, L1-4=H3 - (2/4)h1=176.11875$\mu$m.

To better understand the present solution, the following uses the main lobe viewing angle as an example to illustrate that the light-emitting regions of the sub-pixels in the K pixel islands are misaligned in space, and that the light rays emitted from the light-emitting regions of the sub-pixels in the K pixel islands, after being split by M light-splitting structures, form a continuous light-emitting region in space.

It should be noted that the viewing angle includes the main lobe viewing angle and the side lobe viewing angle. The main lobe viewing angle refers to the viewing angle formed in space after the light emitted by the sub-pixel is split by the light-splitting structure directly above it. The side lobe viewing angle refers to the viewing angle formed in space after the light emitted by the sub-pixel passes through a light-splitting structure next to the light-splitting structure directly above it, for example, through the first light-splitting structure adjacent to the light-splitting structure directly above it is the first-level side lobe viewing angle, through the second light-splitting structure adjacent to the light-splitting structure directly above it is the second-level side lobe viewing angle, and so on.

It should be noted that the space in "the light-emitting regions of the sub-pixels in the K pixel islands are misaligned in space" refers to the visible space of the display device.

In the display device provided by the embodiments of the present disclosure, K pixel islands corresponding to M light-splitting structures, and the light-emitting regions of the sub-pixels in the K pixel islands are misaligned in space. Since the size of the light-splitting structure in the row direction is relatively small, for the K pixel islands corresponding to the M light-splitting structures, the human eyes cannot distinguish which light-splitting structure the light is emitted from. Therefore, to the human eyes, the light emitted from the K pixel islands after being split by the M light-splitting structures above them forms a continuous light-emitting region in space, and the human eyes will not see the "black region" when moving in the visible space, which can alleviate the problem of macroscopic moiré pattern.

In a specific implementation, in the M light-splitting structures arranged in the row direction, in the multiple sub-pixels corresponding to each light-splitting structure, the difference between the viewpoints of two adjacent sub-pixels is M.

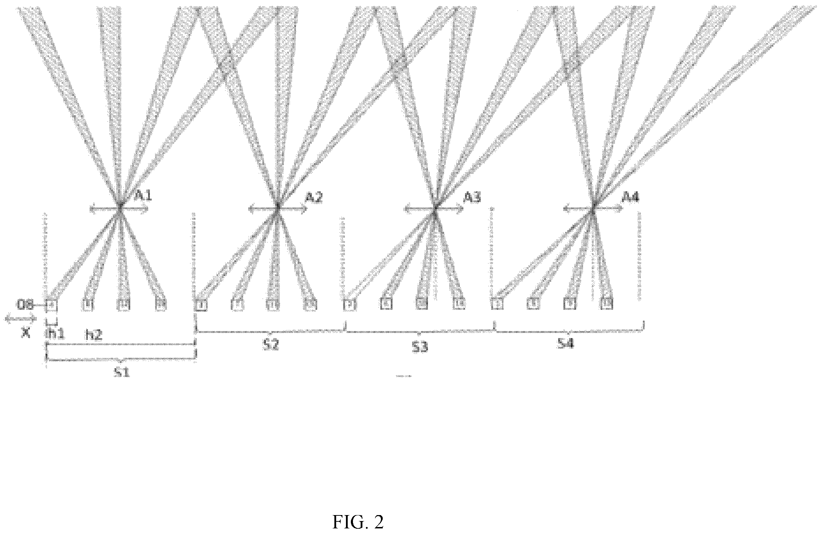

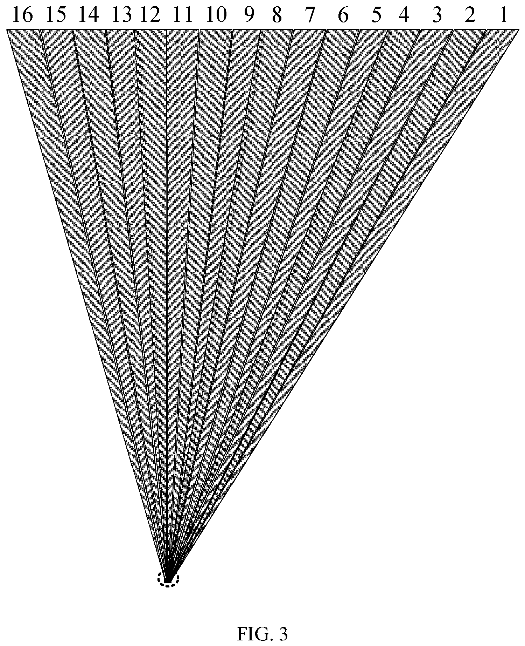

In some embodiments, K is 4, M is 4, N is 16, the opening ratio of the sub-pixel is 1/4, and the optical path diagrams of K-column pixel islands are shown in FIGS. 2 and 3. The 4 light-splitting structures correspond to 4 columns of pixel islands in a pixel repeating unit row, and each row of the 4 columns of pixel islands includes 16 sub-pixels, which are marked as the first sub-pixel 1 to the sixteenth sub-pixel 16, respectively, and the sequence number of each sub-pixel represents its corresponding viewpoint. The 4 pixel islands are respectively the first pixel island S1, the second pixel island S2, the third pixel island S3, and the fourth pixel island S4. The first pixel island S1 includes: the fourth sub-pixel 4, the eighth sub-pixel 8, the twelfth sub-pixel 12, and the sixteenth sub-pixel 16. The second pixel island S2 includes: the third sub-pixel 3, the seventh sub-pixel 7, the eleventh sub-pixel 11 and the fifteenth sub-pixel 15. The third pixel island S3 includes: the second sub-pixel 2, the sixth sub-pixel 6, the tenth sub-pixel 10 and the fourteenth sub-pixel 14. The fourth pixel island S4 includes: the first sub-pixel 1, the fifth sub-pixel 5, the ninth sub-pixel 9 and the thirteenth sub-pixel 13. The light-splitting structures corresponding to the 16 sub-pixels are marked as A1 to A4, respectively. The convergence center line of the light-splitting structure A1 is not misaligned relative to the first symmetry axis of the corresponding sub-region. The convergence center line of the light-splitting structure A2 is misaligned to the right by (1/4)h1 relative to the first symmetry axis of the corresponding sub-region. The convergence center line of the light-splitting structure A3 is misaligned to the right by (2/4)h1 relative to the first symmetry axis of the corresponding sub-region. The convergence center line of the light-splitting structure A4 is misaligned to the right by (3/4)h1 relative to the first symmetry axis of the corresponding sub-region. As shown in FIG. 2, the light-splitting structure A1 covers the fourth sub-pixel 4, the eighth sub-pixel 8, the twelfth sub-pixel 12, and the sixteenth sub-pixel 16, the light-splitting structure A2 covers the third sub-pixel 3, the seventh sub-pixel 7, the eleventh sub-pixel 11, and the fifteenth sub-pixel 15, and the light-splitting structure A3 covers the second sub-pixel 2, the sixth sub-pixel 6, the tenth sub-pixel 10, and the fourteenth sub-pixel 14, and the light-splitting structure A4 covers the first sub-pixel 1, the fifth sub-pixel 5, the ninth sub-pixel 9, and the thirteenth sub-pixel 13. As shown in FIG. 2, the sub-pixels in the 4 pixel islands because of the relative position relationship between them and the light-splitting structures do not constitute a repeating unit. If the sub-pixels are spliced in the order of viewpoints, and the position of each sub-pixel relative to the light-splitting structure remains unchanged, and as shown in FIG. 3, after the sub-pixels corresponding to each light-splitting structure are spliced, the positions of the sub-pixels are complementary, that is, the gaps between the sub-pixels are 0, and the relative position relationship with the light-splitting structure forms a misaligned complementary arrangement. Accordingly, the light-emitting regions of the sub-pixels in the 4 pixel islands are misaligned in space, and the light-emitting regions of the sub-pixels in the 4 pixel islands also form a misaligned complementary arrangement in space. As shown in FIG. 2, since there are gaps between sub-pixels 08, the light rays emitted by adjacent sub-pixels corresponding to the same one light-splitting structure after passing through the same one light-splitting structure A have discontinuous light-emitting angles in space. However, since the positions of the sub-pixels in the 4 pixel islands relative to the 4 light-splitting structures A are misaligned, and the light-emitting regions of the sub-pixels in the 4 pixel islands are misaligned in space, so the light-emitting angles of the light-splitting structures A are also misaligned and complementary. Since the size of the light-splitting structure A is very small, it is impossible for the human eyes to distinguish which light-splitting structure A the light is emitted from. Therefore, as shown in FIG. 3, to the human eyes, the light rays emitted by the 16 sub-pixels in the 4 pixel islands after being split by the 4 light-splitting structures forms a continuous light-emitting region in space, and the human eyes does not see a "black region" when moving in space.

The continuity of the side lobe viewing angles is similar to the continuity of the main lobe viewing angles mentioned above. The two discontinuous first-level side lobe viewing angles of K pixel islands passing through adjacent light-splitting structures can complement each other into a continuous first-level side lobe viewing angle. Additionally, in the horizontal direction, the width of the M light-splitting structures is equal to the width of the K columns of pixel islands in a pixel repeating unit row. Therefore, the boundary of the main lobe viewing angle is parallel to the boundary of the side lobe viewing angle. Since the human eyes cannot distinguish the distance between the boundary of the main lobe viewing angle and the boundary of the side lobe viewing angle, the main lobe viewing angle and the side lobe viewing angle are also observed to be continuous. By the same token, the first-level side lobe viewing angle is continuous with the second-level side lobe viewing angle, the second-level side lobe viewing angle is continuous with the third-level side lobe viewing angle, and so on. In this way, a continuous viewing angle is obtained.

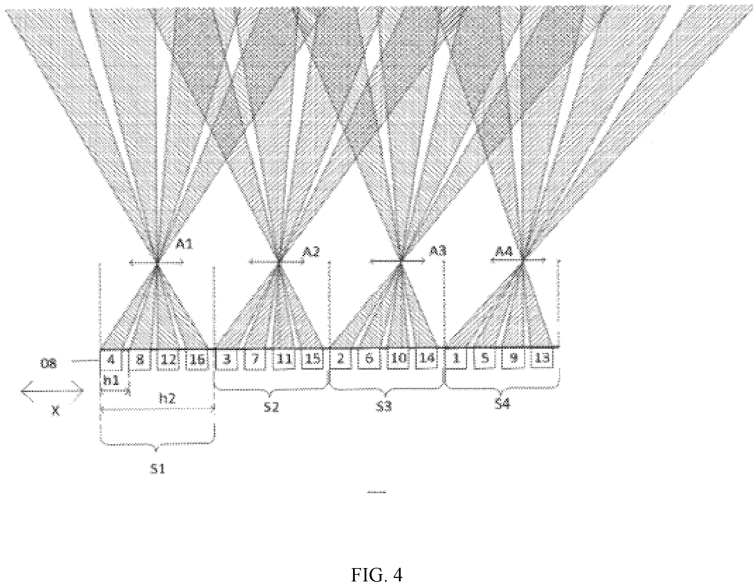

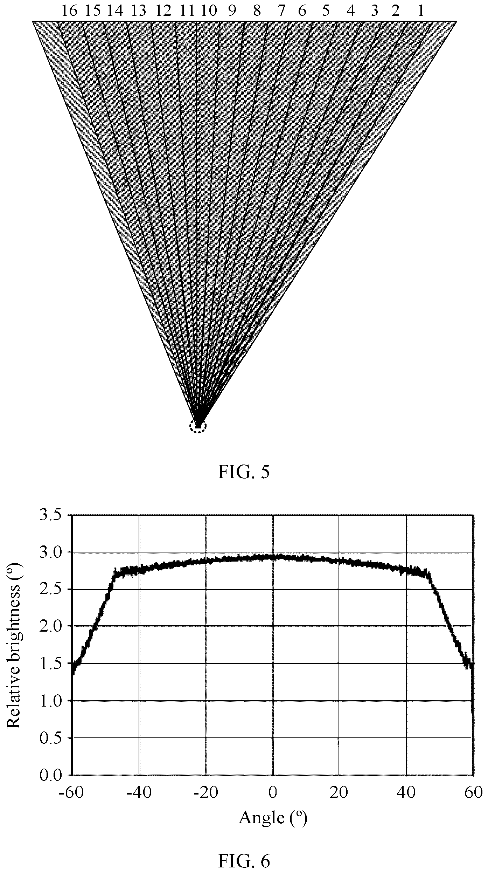

In some embodiments, K is 4, M is 4, N is 16, and the sub-pixel opening ratio is 3/4; and the optical path diagrams of K pixel islands in a pixel unit row are shown in FIGS. 4 and 5. The 4 pixel islands corresponding to the 4 light-splitting structures include 16 sub-pixels, which are marked as the first sub-pixel 1 to the sixteenth sub-pixel 16, respectively. The sequence number of each sub-pixel represents its corresponding viewpoint. The 4 pixel islands are respectively the first pixel island S1, the second pixel island S2, the third pixel island S3, and the fourth pixel island S4. The first pixel island S1 includes: the fourth sub-pixel 4, the eighth sub-pixel 8, the twelfth sub-pixel 12, and the sixteenth sub-pixel 16. The second pixel island S2 includes: the third sub-pixel 3, the seventh sub-pixel 7, the eleventh sub-pixel 11, and the fifteenth sub-pixel 15. The third pixel island S3 includes: the second sub-pixel 2, the sixth sub-pixel 6, the tenth sub-pixel 10, and the fourteenth sub-pixel 14. The fourth pixel island S4 includes: the first sub-pixel 1, the fifth sub-pixel 5, the ninth sub-pixel 9, and the thirteenth sub-pixel 13. The light-splitting structures corresponding to the 16 sub-pixels are marked as A1 to A4, respectively. The convergence center line of the light-splitting structure A1 is not misaligned relative to the first symmetry axis of the corresponding sub-region. The convergence center line of the light-splitting structure A2 is misaligned to the right by (1/4)h1 relative to the first symmetry axis of the corresponding sub-region. The convergence center line of the light-splitting structure A3 is misaligned to the right by (2/4)h1 relative to the first symmetry axis of the corresponding sub-region. The convergence center line of the light-splitting structure A4 is misaligned to the right by (3/4)h1 relative to the first symmetry axis of the corresponding sub-region 1. As shown in FIG. 4, the light-splitting structure A1 covers the fourth sub-pixel 4, the eighth sub-pixel 8, the twelfth sub-pixel 12, and the sixteenth sub-pixel 16, the light-splitting structure A2 covers the third sub-pixel 3, the seventh sub-pixel 7, the eleventh sub-pixel 11, and the fifteenth sub-pixel 15, the light-splitting structure A3 covers the second sub-pixel 2, the sixth sub-pixel 6, the tenth sub-pixel 10, and the fourteenth sub-pixel 14, and the light-splitting structure A4 covers the first sub-pixel 1, the fifth sub-pixel 5, the ninth sub-pixel 9, and the thirteenth sub-pixel 13. As shown in FIG. 4, the sub-pixels in the 4 pixel islands because of the relative position relationship between them and the light-splitting structures do not constitute a repeating unit. If the sub-pixels are spliced in the order of viewpoints, and the position of each sub-pixel relative to the light-splitting structure remains unchanged, and as shown in FIG. 5, after the sub-pixels corresponding to each light-splitting structure are spliced, the positions of the sub-pixels overlap, and the relative position relationship with the light-splitting structure forms a misaligned overlapping arrangement. Correspondingly, the light-emitting regions of the sub-pixels in the 4 pixel islands are arranged in a misaligned manner in space, and the light-emitting regions of the sub-pixels in the 4 pixel islands also form a misaligned complementary arrangement in space. As shown in FIG. 4, since there are gaps between the sub-pixels 08, the light rays emitted by adjacent sub-pixels corresponding to the same one light-splitting structure after passing through the same one light-splitting structure A have discontinuous light-emitting angles in space. However, since the positions of the sub-pixels in the 4 pixel islands relative to the 4 light-splitting structures A are arranged in a misaligned uniform overlapping arrangement, and the light-emitting regions of the sub-pixels in the 4 pixel islands are arranged in a uniformly overlapping manner in space, so the light-emitting angles of the light-splitting structures A are also misaligned uniformly overlapping. Since the size of the light-splitting structure A is very small, the human eyes cannot distinguish which light-splitting structure A the light is emitted from. Therefore, as shown in FIG. 5, to the human eyes, the light rays emitted by the 16 sub-pixels in the 4 pixel islands after being split by the 4 light-splitting structures forms a continuous light-emitting region in space, and the human eyes does not see a "black region" when moving in space.

In some embodiments, as shown in FIG. 5, in the row direction, the ratio of the total width n×h1 of the n sub-pixel opening regions to the width h2 of the pixel island is i/M, where i is an integer greater than 1 and less than or equal to M-1. That is, the opening ratio of the sub-pixels in the pixel island is i/M. In this way, the sub-pixels under each light-splitting repeating unit can be arranged uniformly and overlapped relative to the position of the corresponding light-splitting structure, so that the light-emitting regions of the sub-pixels in the K pixel islands overlap uniformly in space, that is, the light paths of the viewpoints overlap uniformly, which can also eliminate macroscopic moiré pattern and improve the display effect.

In a specific implementation, when the light-emitting regions of the sub-pixels in the K pixel islands overlap uniformly in space, the ratio of the area of the overlapping region of the two sub-pixel light-emitting regions of adjacent sequence numbers to the area of the light-emitting region of one of the sub-pixels is (i-1)/i. The ratio of the area of the overlapping region of the two sub-pixel light-emitting regions of adjacent sequence numbers to the area of one of the sub-pixels is (i-1)/M.

It should be noted that in the row direction, when the ratio of the total width n×h1 of the n sub-pixel opening regions to the width h2 of the pixel island is 1/M, that is, when i=1, the light-emitting regions of the sub-pixels do not overlap with each other in space. When i=2, the ratio of the area of the overlapping region of the two sub-pixel light-emitting regions of adjacent sequence numbers to the area of the light-emitting region of one of the sub-pixels is 1/2, and the ratio of the area of the overlapping region of the two sub-pixel light-emitting regions of adjacent sequence numbers to the area of one of the sub-pixels is 1/M. When i=3, the ratio of the area of the overlapping region of the two sub-pixel light-emitting regions of adjacent sequence numbers to the area of the light-emitting region of one of the sub-pixels is 2/3, and the ratio of the area of the overlapping region of the two sub-pixel light-emitting regions of adjacent sequence numbers to the area of one of the sub-pixels is 2/M. When i=4, the ratio of the area of the overlapping region of the two sub-pixel light-emitting regions of adjacent sequence numbers to the area of the light-emitting region of one of the sub-pixels is 3/4, and the ratio of the area of the overlapping region of the two sub-pixel light-emitting regions of adjacent sequence numbers to the area of one of the sub-pixels is 3/M. When i=M-1, the ratio of the area of the overlapping region of the two sub-pixel light-emitting regions of adjacent sequence numbers to the area of the light-emitting region of one of the sub-pixels is (M-2)/(M-1), and the ratio of the area of the overlapping region of the two sub-pixel light-emitting regions of adjacent sequence numbers to the area of one of the sub-pixels is (M-2)/M, and so on.

It should be noted that FIG. 4 takes the ratio of the total width of the n sub-pixel opening regions to the width of the pixel island in the row direction as (M-1)/M, i.e., 3/4, as an example for illustration, that is, the opening ratio of the sub-pixels in the pixel island in FIG. 4 is 3/4. When the opening ratio of the sub-pixels in the pixel island is (M-1)/M, the opening ratio of the sub-pixels can be maximized while satisfying the uniform spatial overlap between the light-emitting regions of the sub-pixels in the K pixel islands in the row direction. Of course, in a specific implementation, the opening ratio of the sub-pixels in the pixel island can also be 2/4.

In some embodiments, as shown in FIG. 1, centers of sub-pixels 08 in the same one column in any two adjacent pixel repeating unit rows 013 are located on the same one straight line in the column direction Y. That is, the sub-pixels in the plurality of pixel repeating unit rows 013 in FIG. 1 are not misaligned.

It should be noted that in Solution 1 and Solution 2, the centers of sub-pixels in the same column in any two adjacent pixel repeating unit rows are located on the same one straight line in the column direction.

It should be noted that when the centers of sub-pixels in the same one column in different rows of pixel repeating units are located on the same one straight line in the column direction, a large difference in the widths of the sub-pixel opening regions may cause the light emitted by the sub-pixels in the K pixel islands to form a discontinuous light-emitting region in space after being split by M light-splitting structures, that is, the existence of black regions, resulting in macroscopic moiré patterns.

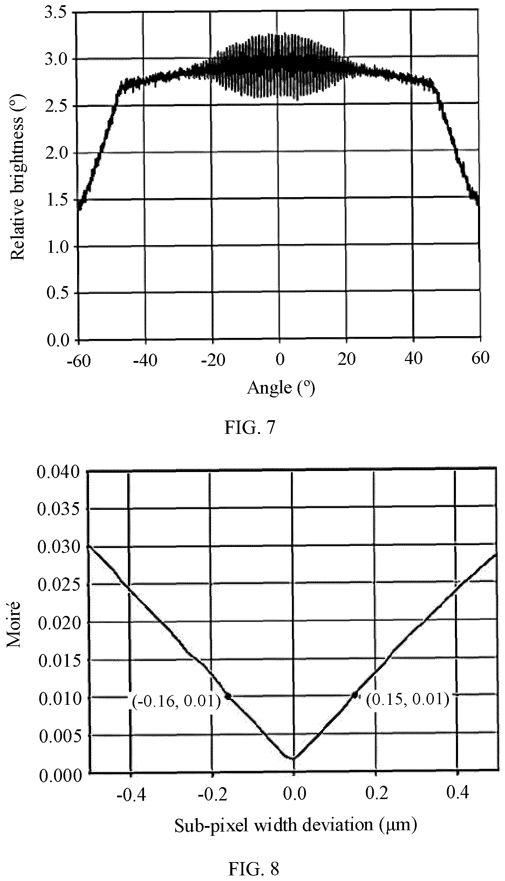

For Solution 1, the case where the sub-pixel opening ratio is 3/4 is simulated. The superposition angular spectrum of the sub-pixels without brightness fluctuation is shown in FIG. 6. The maximum width of the sub-pixel in the row direction is 8.52μm. Since there is no brightness fluctuation, moiré pattern caused by brightness fluctuation will not appear. However, when the sub-pixel opening fluctuates by 1.5μm, that is, the absolute value of the difference between the sub-pixels is 1.5μm, as shown in FIG. 7, the maximum width of the sub-pixel in the row direction is 10.02μm, there is brightness fluctuation, and moiré pattern is generated. FIG. 8 shows the relationship between the sub-pixel opening width deviation and the moiré pattern intensity. In order to make the moiré pattern intensity less than 1%, in the specific implementation, the sub-pixel opening width fluctuation is less than ±0.15μm, that is, the absolute value of the difference in the widths of different sub-pixels in the row direction is less than 0.15μm.

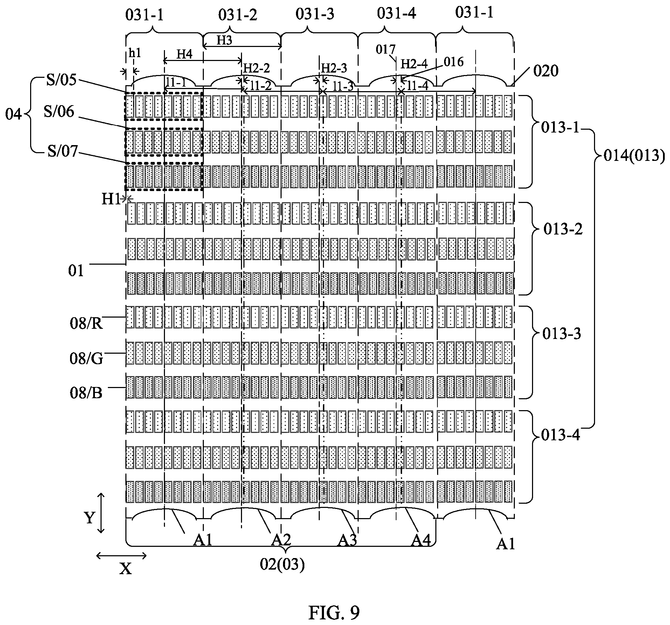

In order to avoid the moiré pattern caused by the width fluctuation in the sub-pixel column direction, in some embodiments, as shown in FIG. 9, the ratio of the misalignment vector H1 of the sub-pixels 08 in at least one pixel repeating unit row 013 relative to the first symmetry axis 017 in the row direction X to the width h1 of the sub-pixel 08 in the row direction X is $Jj=\pm C\frac{1}{2M}$. Thus, the light emitted by the sub-pixels in the pixel repeating unit row that is misaligned relative to the first symmetry axis after being split by M light-splitting structures can form a light-emitting region in space, which can block the black region, thereby avoiding the occurrence of macroscopic moiré pattern.

In a specific implementation, as shown in FIG. 9, the sub-pixels 08 in the second pixel repeating unit row 013-2 is misaligned to the right relative to the first symmetry axis 017 in the row direction X. In FIG. 9, M=4, C=1, H1=(1/8)h1, J2=1/8. That is, the display device provided by the embodiments of the present disclosure can avoid moiré pattern caused by width fluctuation in the sub-pixel column direction by only misaligning one row of multiple pixel repeating unit rows relative to the first symmetry axis. Moiré pattern can be avoided without increasing the difficulty of sub-pixel arrangement design of the display device.

It should be noted that the misalignment vector of the sub-pixels in the pixel repeating unit row relative to the first symmetry axis in the row direction is equal to the misalignment vector of the sub-pixels in the pixel repeating unit row relative to the sub-region boundary in the row direction, and both are H1. In order to intuitively see the misalignment relationship of the sub-pixels in the pixel repeating unit row, FIG. 9 only marks the misalignment vector of the sub-pixels 08 in the pixel repeating unit row 013 relative to the sub-region 031 boundary in the row direction X.

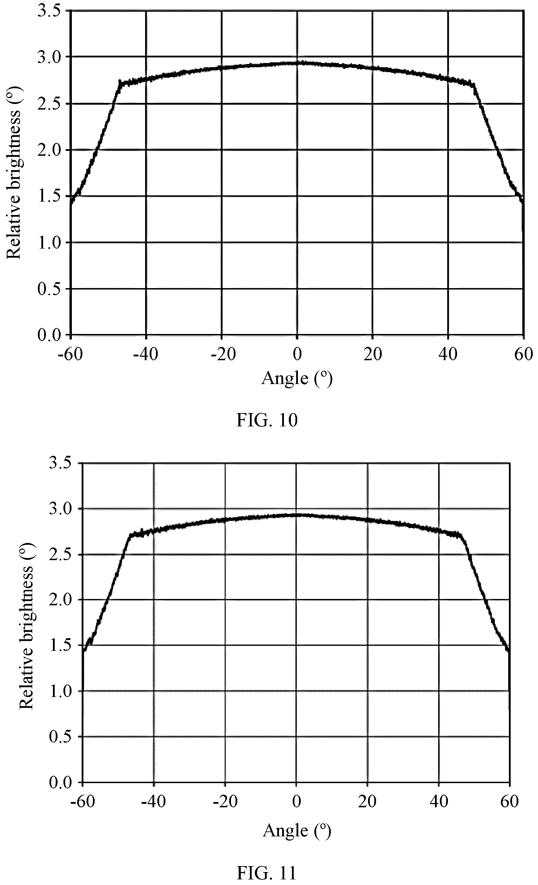

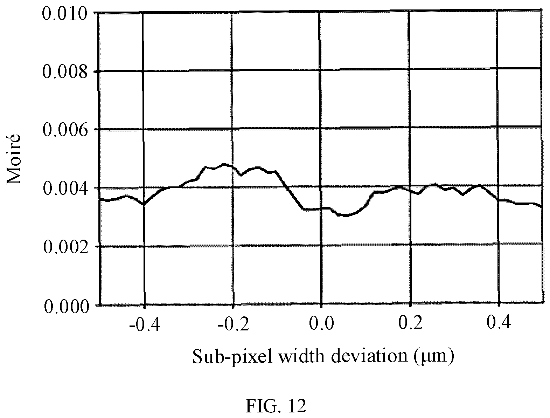

In the specific implementation, the setting shown in FIG. 9 is simulated. When the sub-pixel opening has no fluctuation, the superposition angular spectrum of the sub-pixels is shown in FIG. 10. The maximum width of the sub-pixel in the row direction is 8.52 μm, and there is no brightness fluctuation or moiré pattern. When the sub-pixel opening fluctuates by 1.5 μm, the superposition angular spectrum of the sub-pixels is shown in FIG. 11. The maximum width of the sub-pixel in the row direction is 10.02 μm, and there is also no brightness fluctuation or moiré pattern. FIG. 12 shows the relationship between the sub-pixel opening width deviation and the moiré pattern intensity. It can be seen that the moiré pattern intensity is less than 1% when the sub-pixel opening fluctuates within ±1.5 μm. It can be judged from the trend of FIG. 11 that the tolerable range of the sub-pixel width fluctuation reaches ±2 μm.

In a specific implementation, when the opening ratio of the sub-pixels is i/M, the moiré pattern can be alleviated by other misalignment modes of the sub-pixels in the pixel repeating unit row relative to the first symmetry axis.

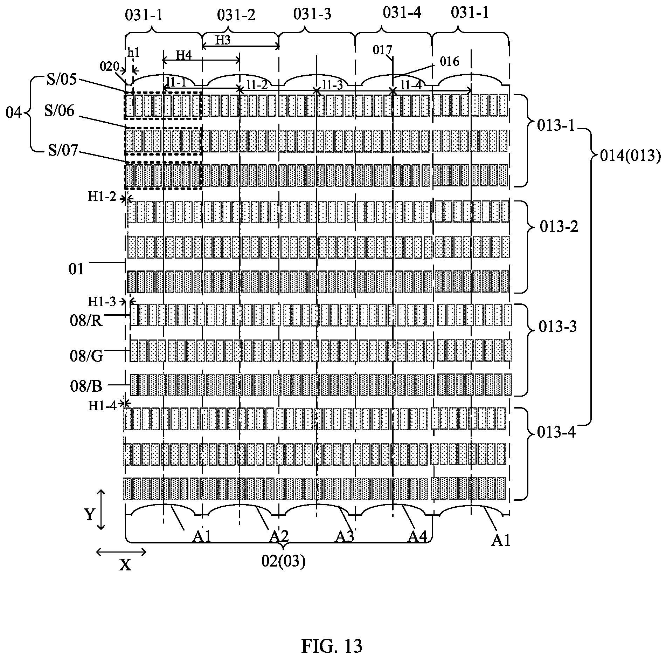

In some embodiments, as shown in FIG. 13, the plurality of pixel repeating unit rows 013 are divided into a plurality of pixel repeating unit groups 014, and each pixel repeating unit group 014 includes M pixel repeating unit rows 013.

In the pixel repeating unit group 014, the ratio of the misalignment vector H1-j of the sub-pixel in the j-th pixel repeating unit row 013 relative to the first symmetry axis 017 in the row direction X to the width h1 of the sub-pixel 08 in the row direction X is $Jj=\pm C\frac{E'}{M}$ ; where j is an integer greater than or equal to 1 and less than or equal to M, C is an integer greater than 0, and E' is an integer greater than or equal to 0 and less than M.

In the display device provided by the embodiments of the present disclosure, in the pixel repeating unit group, the sub-pixels in the pixel repeating unit row are misaligned in the row direction relative to the first symmetry axis, that is, the sub-pixels in different sub-pixel rows are misaligned in the row direction, that is, M pixel repeating unit rows are used as a repeating unit in the arrangement of pixel repeating unit rows, which can avoid the existence of the black region in the light-emitting region formed by the light rays emitted the sub-pixels after being split by M light-splitting structures due to one pixel repeating unit row being used as a repeating unit in the arrangement of pixel repeating unit rows. That is, in the display device provided by the embodiments of the present disclosure, the light rays emitted M pixel repeating unit rows through each light-splitting repeating unit form a continuous light-emitting region in space, and the brightness of the region is the same at all viewing angles, so the human eyes will not see the "black region" when moving in the visible space, which can alleviate the problem of macroscopic moiré pattern.

It should be noted that, taking the row direction X shown in FIG. 13 as an example, the row direction X is the left-right extending direction in the figure, and the sub-pixels in the j-th pixel repeating unit row 013 are misaligned to the right relative to the first symmetry axis 017 in the row direction X. In this case, H1-j is positive, $Jj=+C\frac{E'}{M}$ . Alternatively, the sub-pixels in the j-th pixel repeating unit row 013 are misaligned to the right and left relative to the first symmetry axis 017 in the row direction X. In this case, H1-j is negative, $Jj=-C\frac{E'}{M}$ .

In some embodiments, in the pixel repeating unit group, Jj corresponding to one pixel repeating unit row is 0, and Jj corresponding to the remaining pixel repeating unit rows are not 0.

In some embodiments, in the pixel repeating unit group 014, the Jj corresponding to the plurality of pixel repeating unit rows 013 are not equal, and the absolute value of the difference between the Jj corresponding to any two pixel repeating unit rows is not an integer greater than or equal to 1. In this way, it is possible to further avoid the black region in the light-emitting region formed by the light emitted by the sub-pixels after being split by the M light-splitting structures, and avoid the occurrence of macroscopic moiré pattern.

In some embodiments, in the sub-unit, the ratio △J of the misalignment vector of the c-th sub-pixel in at least some of two adjacent pixel repeating unit rows in the row direction to the width of this sub-pixel in the row direction is not equal to $\pm C\frac{1}{M}$ or $\pm C\frac{M-1}{M}$ .

It should be noted that when the difference between the two Jj is M or an integer multiple of M, for example, two Jj are -5/4 and -1/4 respectively, the effect of black region shielding when Jj is -5/4 is the same as the effect of black region shielding when Jj is -1/4.

In some embodiments, C=1, that is, the misalignment vector of the sub-pixels relative to the first symmetry axis does not exceed the width of one sub-pixel in the row direction X, which can avoid a pixel repeating unit row as a repeating unit in the pixel repeating unit row arrangement while avoiding excessive sub-pixel misalignment distance, which is conducive to reasonable use of the display panel space.

In some embodiments, when C=1, in each pixel repeating unit group, multiple Jj corresponding to M pixel repeating unit rows form an arithmetic progression, and a common difference of the arithmetic progression is 1/M.

It should be noted that when the opening ratio of the sub-pixel is 3/4, that is, M=4, Jj can be selected from the following: -3/4, -2/4, -1/4, 0, 1/4, 2/4, 3/4. The multiple Jj corresponding to the M pixel repeating unit rows form an arithmetic progression, so the 4 Jj can be selected as one of the following combinations: (-3/4, -2/4, -1/4, 0), (-2/4, -1/4, 0, 1/4), (-1/4, 0, 1/4, 2/4), (0, 1/4, 2/4, 3/4). After selecting one of the Jj combinations, the 4 Jj can be randomly allocated to the 4 pixel repeating unit rows, and there are 24 allocation situations in total. Next, the selection of the combination (-1/4, 0, 1/4, 2/4) is taken as an example for explanation.

Solution 3: As shown in FIG. 13, the first pixel repeating unit row 013-1 is not misaligned relative to the first symmetry axis 017, that is, H1-1=0, J1=0. The second pixel repeating unit row 013-2 is misaligned to the right by (1/4)h1 relative to the first symmetry axis 017, that is, H1-2=(1/4)h1, J2=1/4, and accordingly, the second pixel repeating unit row 013-2 is misaligned to the right by (1/4)h1 relative to the first pixel repeating unit row 013-1. The third pixel repeating unit row 013-3 is misaligned to the right by (2/4)h1 relative to the first symmetry axis 017, that is, H1-3=(2/4)h1, J3=2/4, and accordingly, the third pixel repeating unit row 013-3 is misaligned to the right by (2/4)h1 relative to the first pixel repeating unit row 013-1. The fourth pixel repeating unit row 013-4 is misaligned to the left by (1/4)h1 relative to the first symmetry axis 017, that is, H1-4=(-1/4)h1, J4=-1/4, and accordingly, the fourth pixel repeating unit row 013-4 is misaligned to the left by (1/4)h1 relative to the first pixel repeating unit row 013-1.

In some embodiments, as shown in FIG. 13, the convergence center line 016 coincides with the first symmetry axis 017. In FIG. 13, the distances L1 between the adjacent convergence center lines 016 are equal and equal to the distance H3 between adjacent first symmetry axes 017, and equal to the width of the pixel island S in the row direction X. In a specific implementation, when the width of the pixel island S in the row direction X = 181.8 $\mu$m, in FIG. 13, L1-1 = L1-2 = L1-3 = L1-4 = 181.8 $\mu$m.

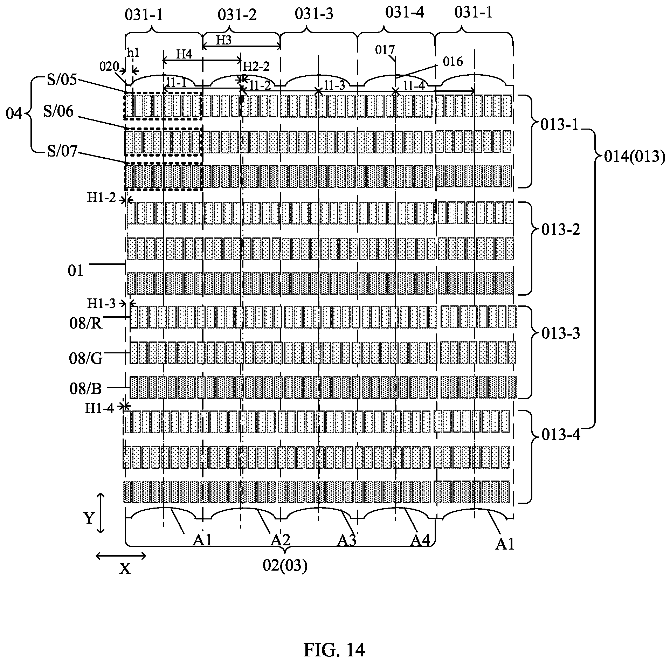

When $Jj = \pm C \frac{E'}{M}$, or, in some embodiments, as shown in FIG. 14, in each light-splitting repeating unit 03, the ratio of the misalignment vector H2 of the convergence center line 016 of at least one light-splitting structure A relative to the first symmetry axis 017 in the row direction X to the width h1 of the sub-pixel 08 in the row direction X is $Vj = \pm C \frac{1}{2M}$.

This can avoid the discontinuity of the light-emitting region formed in space after the light emitted by the sub-pixel is split by M light-splitting structures due to the difference in the widths of the sub-pixel opening regions in the row direction, i.e., the fluctuation of the sub-pixel opening regions in the row direction, thereby avoiding the occurrence of macroscopic moiré pattern.

In a specific implementation, C=1, as shown in FIG. 14, in each light-splitting repeating unit 03, the ratio of the misalignment vector H2-1 of the convergence center line 016 of the 2-nd light-splitting structure A2 relative to the first symmetry axis 017 in the row direction X to the width h1 of the sub-pixel 08 in the row direction X is $Vj = \pm \frac{1}{2M}$.

In a specific implementation, when M=4, $V2 = \pm \frac{1}{8}$. In FIG. 14, $V2 = \frac{1}{8}$ is taken as an example for illustration, that is, the convergence center line 016 of the 2-nd light-splitting structure A2 is misaligned to the right by $\frac{1}{8}h1$ relative to the first symmetry axis 017 in the row direction X.

In the specific implementation, in FIG. 1 to FIG. 14, the opening ratio of the sub-pixels as being greater than or equal to 0.9/M and less than or equal to 1 as an example are taken as an example for illustration. Of course, the opening ratio of the sub-pixels may also be in other ranges.

In some embodiments, each pixel island includes n sub-pixels arranged at intervals along the row direction. Where n is an integer greater than 1. The sub-pixel includes a sub-pixel opening region. In the row direction, the ratio of the total width of the n sub-pixel opening regions to the width of the pixel island is greater than or equal to 0.9/(M×M') and less than or equal to 1. That is, the opening ratio of the sub-pixels is greater than or equal to 0.9/(M×M') and less than or equal to 1.

In some embodiments, in the row direction, the ratio of the width of the n sub-pixel opening regions to the width of the pixel island is i/(M×M'), i is an integer greater than or equal to 1 and less than or equal to M×M'-1. That is, the opening ratio of the sub-pixels is i/(M×M').

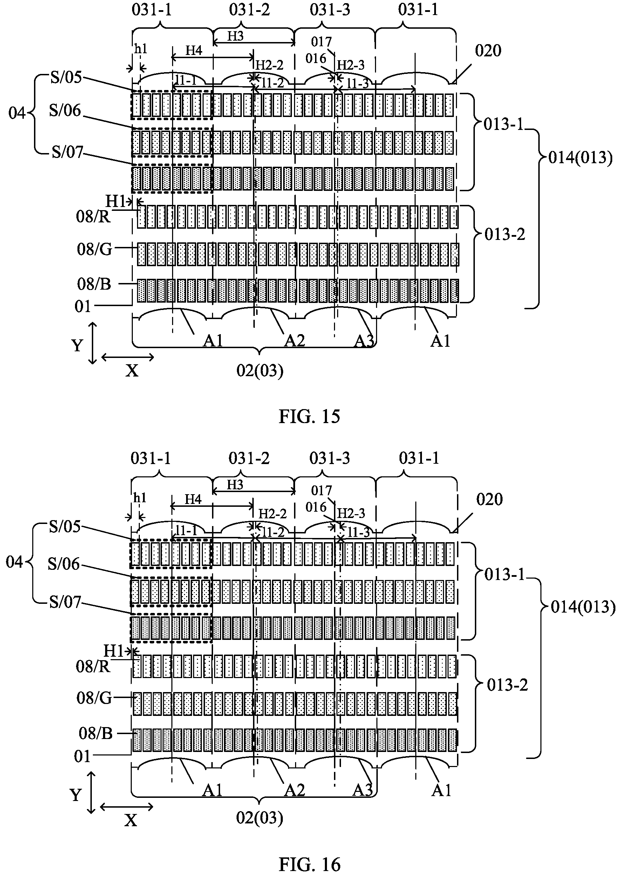

In some embodiments, as shown in FIG. 15, the plurality of pixel repeating unit rows 013 are divided into a plurality of pixel repeating unit groups 014, and each pixel repeating unit group 014 includes M' pixel repeating unit rows 013.

In a specific implementation, when the opening ratio of the sub-pixels is i/(M×M'), the Vj corresponding to the M light-splitting structures in the light-splitting repeating unit can be made unequal, and the sub-pixels 08 in any two adjacent pixel repeating unit rows 013 in the pixel repeating unit group are arranged in a misaligned manner in the row direction X. The M light-splitting structures are used as a repeating unit of the light-splitting structure arrangement, and the M' pixel repeating unit rows are used as a repeating unit of the pixel repeating unit arrangement. The light rays emitted by M' pixel repeating unit rows emit through M light-splitting structure groups form a continuous light-emitting region in space, and the brightness of the region is the same at all viewing angles, so the human eyes will not see the "black region" when moving in the visible space, avoiding the appearance of macroscopic moiré pattern.

In some embodiments, as shown in FIG. 15, in the light-splitting repeating unit 03, the ratio of the misalignment vector H2 of the convergence center line 016 of the j-th light-splitting structure Aj relative to the first symmetry axis 017 in the row direction X to the width h1 of the sub-pixel 08 in the row direction X is $Vj = \pm C \dfrac{E''}{(M \times M')}$ .

In the pixel repeating unit group 014, the ratio of the misalignment vector H2 of the sub-pixel 08 in the j'-th pixel repeating unit row 013-j' relative to the first symmetry axis 017 in the row direction X to the width h1 of the sub-pixel 08 in the row direction X is $Jj' = \pm C' \dfrac{E'''}{M'}$ .

Where, j is an integer greater than or equal to 1 and less than or equal to M, j' is an integer greater than or equal to 1 and less than or equal to M', C and C' are both integers greater than 0, E'' is an integer greater than or equal to 0 and less than M, and E''' is an integer greater than or equal to 0 and less than M'.

In some embodiments, in the light-splitting repeating unit, the Vj corresponding to the M light-splitting structures are not equal. That is, the misalignment vectors of the convergence center lines relative to the first symmetry axes in the row direction are not equal, so that a single light-splitting structure does not constitute a repeating unit of an arrangement of multiple light-splitting structures, and avoids the black region in the light-emitting region formed in space by the light emitted by the sub-pixels that is split by the M light-splitting structures when a single light-splitting structure constitutes a repeating unit of an arrangement of multiple light-splitting structures. That is, in the embodiments of the present disclosure, a region corresponding to the M light-splitting structures is used as a repeating unit, and the light rays emitted from this region forms a continuous light-emitting region in space, and the brightness of this region is the same at all viewing angles, so the human eyes will not see the "black region" when moving in the visible space, which can alleviate the problem of macroscopic moiré pattern.

In some embodiments, Vj corresponding to the j-th light-splitting structures in different light-splitting repeating units are all equal.

In some embodiments, in a light-splitting repeating unit, C in Vj corresponding to each light-splitting structure is equal.

In some embodiments, in a light-splitting repeating unit, Vj corresponding to one light-splitting structure is 0, and Vj corresponding to the remaining light-splitting structures are not 0, and Vj corresponding to the remaining light-splitting structures are not equal.

In some embodiments, in a pixel repeating unit group, Jj' corresponding to one pixel repeating unit row is 0, and Jj' corresponding to the remaining pixel repeating unit rows are not 0.

In some embodiments, in the pixel repeating unit group 014, the Jj' corresponding to the plurality of pixel repeating unit rows 013 are not equal, and the absolute value of the difference between the Jj' corresponding to any two pixel repeating unit rows is not an integer greater than or equal to 1. In this way, it is possible to further avoid the presence of black region in the light-emitting region formed in space by the light emitted by the sub-pixels after being split by the M light-splitting structures, thereby avoiding the occurrence of macroscopic moiré patterns.

In some embodiments, C=C'=1.

In each light-splitting repeating unit, multiple Vj corresponding to the M light-splitting structures form an arithmetic progression, and a common difference of the arithmetic progression is 1/(M×M').

In each pixel repeating unit group, multiple Jj' corresponding to M' pixel repeating unit rows form an arithmetic progression, and a common difference of the arithmetic progression is 1/M'.

Still taking N/M as an integer as an example for illustration, when N/M is an integer, in some embodiments, each light-splitting repeating unit corresponds to K columns of pixel islands in the pixel repeating unit row, K is an integer greater than 1, and K/M is an integer.

In a specific implementation, the sub-pixel opening ratio is 5/6, M=3, M'=2. The 3 light-splitting structures are A1, A2, and A3. Each light-splitting repeating unit includes 3 sub-regions 031-1, 031-2, and 031-3, A1 corresponds to 031-1, A2 corresponds to 031-2, and A3 corresponds to 031-3.

In a specific implementation, when M=3, and C=C'=1, Vj corresponding to the 3 light-splitting structures are selected from the following: -2/6, -1/6, 0, 1/6, 2/6. Vj corresponding to the 3 light-splitting structures are any of the following combinations: (-2/6, -1/6, 0), (-1/6, 0, 1/6), (0, 1/6, 2/6). The Vj in the above combination can be randomly assigned to the 3 light-splitting structures. The Jj' corresponding to the two pixel repeating unit rows is selected from the following: -1/2, 0, 1/2. The Jj' corresponding to the two pixel repeating unit groups is any of the following combinations: (-1/2, 0), (0, 1/2), and the Jj' in the above combination can be randomly assigned to the two pixel repeating unit rows. Next, an example is given with the Vj combination of (0, 1/6, 2/6) and the Jj' combination of (0, 1/2) for illustration.

Solution 4: As shown in FIG. 15, the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/6)h1 relative to the first symmetry axis 017 of the sub-region 031-2, that is, H2-2=(1/6)h1. The convergence center line 016 of the light-splitting structure A3 is misaligned to the right by (2/6)h1 relative to the first symmetry axis 017 of the sub-region 031-3, that is, H2-3=(2/6)h1. The first distance between adjacent light-splitting structures A1 and A2 is L1-1, the first distance between adjacent light-splitting structures A2 and A3 is L1-2, and the first distance between adjacent light-splitting structures A3 and A1 is L1-3. L1-1, L1-2, and L1-3 are not completely equal, L1-1 = H3 + (1/6)h1 = L1-2, L1-3 = H3 - (1/6)h1. The width of the pixel island in the row direction and the distance H3 between two adjacent first symmetry axes are both 181.8 μm, L1-1 = L1-2 = 183.69375 μm, and L1-3 = 178.0125 μm. The first pixel repeating unit row 013-1 is not misaligned relative to the first symmetry axis 017, that is, H1-1=0, J1=0. The second pixel repeating unit row 013-2 is misaligned to the right by (1/2)h1 relative to the first symmetry axis 017, that is, H1-2=(1/2)h1, J2=1/2, and accordingly, the second pixel repeating unit row 013-2 is misaligned to the right by (1/2)h1 relative to the first pixel repeating unit row 013-1.

Alternatively, in some embodiments, as shown in FIG. 16, in the light-splitting repeating unit 03, the ratio of the misalignment vector H2 of the convergence center line 016 of the j-th light-splitting structure Aj relative to the first symmetry axis 017 in the row direction X to the width h1 of the sub-pixel 08 in the row direction X is $V_j=\pm C\frac{E''}{M}$ .

In the pixel repeating unit group 014, the ratio of the misalignment vector H2 of the sub-pixel 08 in the j'-th pixel repeating unit row 013-j' relative to the first symmetry axis 017 in the row direction X to the width h1 of the sub-pixel 08 in the row direction X is $j'=\pm C'\frac{E'''}{(M\times M')}$ .

Where, j is an integer greater than or equal to 1 and less than or equal to M, j' is an integer greater than or equal to 1 and less than or equal to M', C and C' are both integers greater than 0, E'' is an integer greater than or equal to 0 and less than M, and E''' is an integer greater than or equal to 0 and less than M'.

In some embodiments, in the light-splitting repeating unit, Vj corresponding to the M light-splitting structures are not equal.

In some embodiments, Vj corresponding to the j-th light-splitting structures in different light-splitting repeating units are all equal.

In some embodiments, in a light-splitting repeating unit, C in Vj corresponding to each light-splitting structure is equal.

In some embodiments, in a light-splitting repeating unit, Vj corresponding to one light-splitting structure is 0, and Vj corresponding to the remaining light-splitting structures are not 0, and Vj corresponding to the remaining light-splitting structures are not equal.

In some embodiments, in a pixel repeating unit group, Jj' corresponding to one pixel repeating unit row is 0, and Jj' corresponding to the remaining pixel repeating unit rows are not 0.

In some embodiments, in the pixel repeating unit group 014, the Jj' corresponding to the plurality of pixel repeating unit rows 013 are not equal, and the absolute value of the difference between the Jj' corresponding to any two pixel repeating unit rows is not an integer greater than or equal to 1.

In some embodiments, C=C'=1.

In each light-splitting repeating unit, multiple Vj corresponding to the M light-splitting structures form an arithmetic progression, and a common difference of the arithmetic progression is 1/M.

In each pixel repeating unit group, multiple Jj corresponding to M' pixel repeating unit rows form an arithmetic progression, and a common difference of the arithmetic progression is 1/(M×M').

Still taking N/M as an integer as an example for illustration, when N/M is an integer, in some embodiments, each light-splitting repeating unit corresponds to K columns of pixel islands in the pixel repeating unit row, K is an integer greater than 1, and K/M is an integer.

In a specific implementation, the sub-pixel opening ratio is 5/6, M=3, M'=2. The 3 light-splitting structures are A1, A2, and A3. Each light-splitting repeating unit includes 3 sub-regions 031-1, 031-2, and 031-3, A1 corresponds to 031-1, A2 corresponds to 031-2, and A3 corresponds to 031-3.

In a specific implementation, when M=3, and C=C'=1, Vj corresponding to the 3 light-splitting structures are selected from the following: -2/3, -1/3, 0, 1/3, 2/3. Vj corresponding to the 3 light-splitting structures are any of the following combinations: (-2/3, -1/3, 0), (-1/3, 0, 1/3), (0, 1/3, 2/3). The Vj in the above combination can be randomly assigned to the 3 light-splitting structures. The Jj' corresponding to the two pixel repeating unit rows are selected from the following: -1/6, 0, 1/6. The Jj' corresponding to the two pixel repeating unit rows is any of the following combinations: (-1/6, 0), (0, 1/6), and the Jj' in the above combination can be randomly assigned to the two pixel repeating unit rows. Next, an example is given with the Vj combination of (0, 1/3, 2/3) and the Jj' combination of (0, 1/6) for illustration.

Solution 5: As shown in FIG. 16, the convergence center line 016 of the light-splitting structure A1 is not misaligned relative to the first symmetry axis 017 of the sub-region 031-1, i.e., H2-1=0. The convergence center line 016 of the light-splitting structure A2 is misaligned to the right by (1/3)h1 relative to the first symmetry axis 017 of the sub-region 031-2, i.e., H2-2=(1/3)h1. The convergence center line 016 of the light-splitting structure A3 is misaligned to the right by (2/3)h1 relative to the first symmetry axis 017 of the sub-region 031-3, i.e., H2-3=(2/3)h1. The first distance between adjacent light-splitting structures A1 and A2 is L1-1, the first distance between adjacent light-splitting structures A2 and A3 is L1-2, and the first distance between adjacent light-splitting structures A3 and A1 is L1-3. L1-1, L1-2, and L1-3 are not completely equal, L1-1 = H3 + (1/3)h1 = L1-2, L1-3 = H3 - (1/3)h1. The width of the pixel island in the row direction and the distance H3 between two adjacent first symmetry axes are both 181.8 $\mu$m, L1-1 = L1-2 = 185.5875 $\mu$m, and L1-3 = 174.225 $\mu$m. The first pixel repeating unit row 013-1 is not misaligned relative to the first symmetry axis 017, that is, H1-1=0, J1=0. The second pixel repeating unit row 013-2 is misaligned to the right by (1/6)h1 relative to the first symmetry axis 017, that is, H1-2=(1/6)h1, J2=1/6, and accordingly, the second pixel repeating unit row 013-2 is misaligned to the right by (1/6)h1 relative to the first pixel repeating unit row 013-1.

The embodiments of the present disclosure provide display devices such as Solution 4 and Solution 5, and the sub-pixels in any two adjacent pixel repeating unit rows in the pixel repeating unit group are misaligned in the row direction. Meanwhile, in the light-splitting repeating unit, the Vj corresponding to the M light-splitting structures are not equal, which can avoid the discontinuity of the light-emitting region formed by the sub-pixels through the light-splitting structure due to the misaligned arrangement of the sub-pixels in the pixel repeating unit row, and further avoid the occurrence of macroscopic moiré patterns.

In a specific implementation, in order to increase the tolerable range of the fluctuation of the width of the sub-pixel opening region in the row direction and avoid the moiré pattern problem caused by the discontinuity of the light-emitting region caused by the fluctuation of the width of the sub-pixel opening region in the row direction, the misalignment vector of the convergence center line relative to the first symmetry axis or the misalignment vector of the sub-pixel relative to the first symmetry axis can be further adjusted.

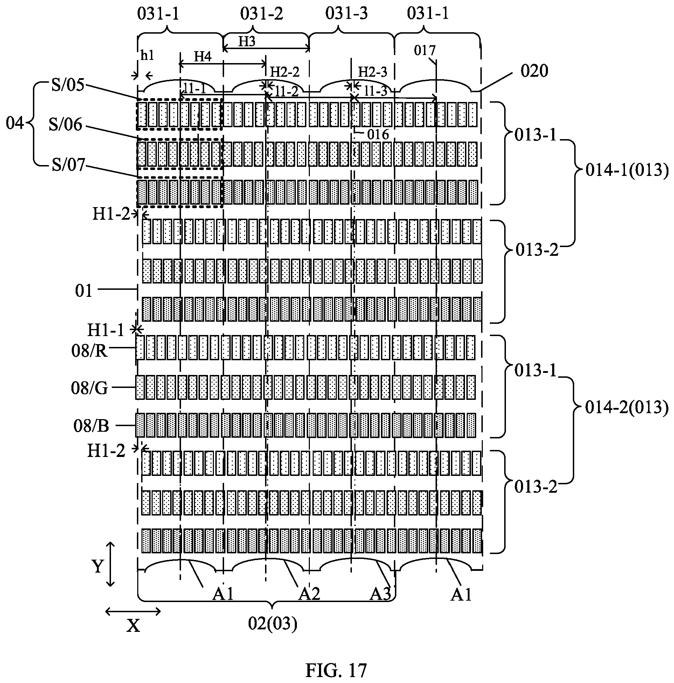

In some embodiments, as shown in FIG. 17, in the light-splitting repeating unit 03, the ratio of the misalignment vector H2-j of the convergence center line 016 of the j-th light-splitting structure Aj in the row direction X relative to the first symmetry axis 017 to the width h1 of the sub-pixel 08 in the row direction X is $Vj = \pm C \dfrac{E''}{(M \times M')}$. In the plurality of pixel repeating unit groups 014, the ratio of the misalignment vector H1-j of the sub-pixel 08 in the pixel repeating unit row 013 of at least one pixel repeating unit group 014 in the row direction X relative to the first symmetry axis 017 to the width h1 of the sub-pixel 08 in the row direction X is $Jj' = \pm C' \dfrac{E''''}{2(M \times M')}$, and the ratio of the misalignment vector H1-j of the sub-pixel 08 in the pixel repeating unit row 013 of the remaining pixel repeating unit groups 014 in the row direction X relative to the first symmetry axis 017 to the width h1 of the sub-pixel 08 in the row direction X is $Jj' = \pm C' \dfrac{E'''}{M'}$.

Where, j is an integer greater than or equal to 1 and less than or equal to M, j' is an integer greater than or equal to 1 and less than or equal to M', C and C' are both integers greater than 0, E'' is an integer greater than or equal to 0 and less than M, E''' is an integer greater than or equal to 0 and less than M', and E'''' is an integer greater than 0 and less than 2(M×M').

In the display device provided by the embodiments of the present disclosure, the combination of Jj' corresponding to at least some pixel repeating unit groups is different from the combination of Jj' corresponding to remaining pixel repeating unit groups, thereby avoiding the discontinuity of the light-emitting region formed in space by the light emitted by the sub-pixel after being split by M light-splitting structures due to the difference in the width of the sub-pixel opening region in the row direction, that is, the fluctuation of the sub-pixel opening region in the row direction, thereby avoiding the occurrence of macroscopic moiré patterns.

In some embodiments, in each light-splitting repeating unit, the Vj corresponding to the M light-splitting structures are not equal. The Vj corresponding to the j-th light-splitting structures in different light-splitting repeating units are all equal. In a light-splitting repeating unit, the C in the Vj corresponding to each light-splitting structure is equal. In a light-splitting repeating unit, the Vj corresponding to one light-splitting structure is 0, the Vj corresponding to the remaining light-splitting structures is not 0, and the Vj corresponding to the remaining light-splitting structures are not equal.

In some embodiments, in the pixel repeating unit groups of $Jj' = \pm C' \dfrac{E'''}{M'}$, Jj' corresponding to one pixel repeating unit row is 0, and Jj' corresponding to the remaining pixel repeating unit rows are not 0. Jj' corresponding to any pixel repeating unit row in the pixel repeating unit group of $Jj' = \pm C' \dfrac{E'''}{M'}$ is not equal to Jj' corresponding to any pixel repeating unit row in the pixel repeating unit group of $Jj' = \pm C' \dfrac{E''''}{2(M \times M')}$.

In a specific implementation, for example, the ratio of the misalignment vector of the sub-pixel in the pixel repeating unit row of the second pixel repeating unit group relative to the first symmetry axis in the row direction to the width of the sub-pixel in the row direction is $Jj' = \pm C' \dfrac{E''''}{2(M \times M')}$. The ratio of the misalignment vector of the sub-pixel in the pixel repeating unit row of the remaining pixel repeating unit groups relative to the first symmetry axis in the row direction to the width of the sub-pixel in the row direction is $Jj'=\pm C'\dfrac{E'''}{M'}$ .

In the specific implementation, the sub-pixel opening ratio is still taken as 5/6, M=3, M'=2. The 3 light-splitting structures are A1, A2, and A3. Each light-splitting repeating unit includes 3 sub-regions 031-1, 031-2, and 031-3, A1 corresponds to 031-1, A2 corresponds to 031-2, and A3 corresponds to 031-3.

In a specific implementation, when M=3, and C=C'=1, Vj corresponding to the 3 light-splitting structures are selected from the following: -2/6, -1/6, 0, 1/6, 2/6. Vj corresponding to the 3 light-splitting structures are any of the following combinations: (-2/6, -1/6, 0), (-1/6, 0, 1/6), (0, 1/6, 2/6). The Vj in the above combination can be randomly assigned to the 3 light-splitting structures. The Jj' corresponding to the second pixel repeating unit group is selected from the following: -11/12, -9/12, -7/12, -5/12, -3/12, -1/12, 1/12, 3/12, 5/12, 7/12, 9/12, 11/12. The Jj' corresponding to the remaining pixel repeating unit groups are selected from the following: -1/2, 0, 1/2. Next, an example is given in which the Vj combination is (0, 1/6, 2/6), the Jj' combination corresponding to the second pixel repeating unit group is (-1/12, 5/12), and the Jj' combination corresponding to the remaining pixel repeating unit groups is (0, 1/2).

Solution 6: as shown in FIG. 17, the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/6)h1 relative to the first symmetry axis 017 of the sub-region 031-2, that is, H2-2=(1/6)h1. The convergence center line 016 of the light-splitting structure A3 is misaligned to the right by (2/6)h1 relative to the first symmetry axis 017 of the sub-region 031-3, that is, H2-3=(2/6)h1. In the second pixel repeating unit group 014-2, the first pixel repeating unit row 013-1 is misaligned to the left by (-1/12)h1 relative to the first symmetry axis 017, that is, in the pixel repeating unit group, H1-1 = -1/12, and the second pixel repeating unit row 013-2 is misaligned to the left and right by (5/12)h1 relative to the first symmetry axis 017, that is, in the pixel repeating unit group, H1-12 = 5/12. In the remaining pixel repeating unit groups 014, (taking the first pixel repeating unit group 014-1 as an example), the first pixel repeating unit row 013-1 is not misaligned relative to the first symmetry axis 017, that is, H1-1=0, J1=0. The second pixel repeating unit row 013-2 is misaligned to the right by (1/2)h1 relative to the first symmetry axis 017, that is, H1-2=(1/2) h1, J2=1/2, and accordingly, the second pixel repeating unit row 013-2 is misaligned to the right by (1/2)h1 relative to the first pixel repeating unit row 013-1.

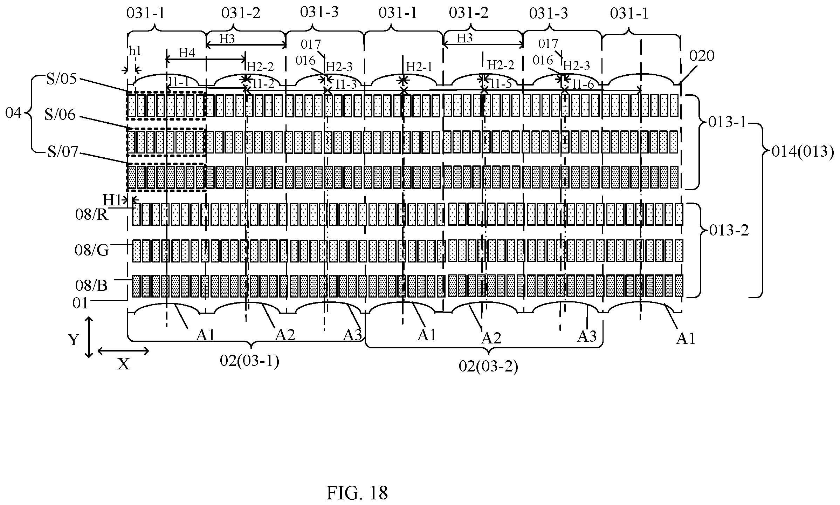

Alternatively, in some embodiments, as shown in FIG. 18, in two adjacent light-splitting repeating units 03, the ratio of the misalignment vector H2-j of the convergence center line 016 of the j-th light-splitting structure Aj of one light-splitting repeating unit 03 in the row direction X relative to the first symmetry axis 017 to the width h1 of the sub-pixel 08 in the row direction X is $Vj=\pm C\dfrac{E''}{(M\times M')}$ ; and the ratio of the misalignment vector H2-j of the convergence center line 016 of the j-th light-splitting structure Aj of another light-splitting repeating unit 03 in the row direction X relative to the first symmetry axis 017 to the width h1 of the sub-pixel 08 in the row direction X is $Vj=\pm C\dfrac{E''''}{2(M\times M')}$ .

In the pixel repeating unit group 014, the ratio of the misalignment vector H1 of the sub-pixels 08 in the pixel repeating unit row 013 in the row direction X relative to the first symmetry axis 017 to the width h1 of the sub-pixel 08 in the row direction X is $Jj'=\pm C'\dfrac{E'''}{M'}$ .

Where, j is an integer greater than or equal to 1 and less than or equal to M, j' is an integer greater than or equal to 1 and less than or equal to M', C and C' are both integers greater than 0, E" is an integer greater than or equal to 0 and less than M, E''' is an integer greater than or equal to 0 and less than M', and E'''' is an integer greater than 0 and less than 2(M×M').

In the display device provided by the embodiments of the present disclosure, the combinations of Vj corresponding to two adjacent light-splitting repeating units are different, thereby avoiding the discontinuity of the light-emitting region formed in space by the light emitted by the sub-pixel after being split by M light-splitting structures due to the difference in the width of the sub-pixel opening region in the row direction, that is, the fluctuation of the sub-pixel opening region in the row direction, thereby avoiding the occurrence of macroscopic moiré patterns.

In some embodiments, in two adjacent light-splitting repeating units, C in Vj corresponding to each light-splitting unit is equal, and Vj corresponding to 2M light-splitting structures are not equal.

In some embodiments, in a pixel repeating unit group, Jj' corresponding to one pixel repeating unit row is 0, and Jj' corresponding to the remaining pixel repeating unit rows are not 0.

In the specific implementation, the sub-pixel opening ratio is still taken as 5/6, M=3, M'=2. The 3 light-splitting structures are A1, A2, and A3. Each light-splitting repeating unit includes 3 sub-regions 031-1, 031-2, and 031-3, A1 corresponds to 031-1, A2 corresponds to 031-2, and A3 corresponds to 031-3.

In a specific implementation, when M=3 and C=C'=1, among two adjacent light-splitting repeating units, Vj corresponding to the 3 light-splitting structures of one of the light-splitting repeating units are selected from the following: -2/6, -1/6, 0, 1/6, 2/6, and Vj corresponding to the 3 light-splitting structures of another light-splitting repeating unit are selected from the following: -11/12, -9/12, -7/12, -5/12, -3/12, -1/12, 1/12, 3/12, 5/12, 7/12, 9/12, 11/12, for example, 1/12, 3/12, 5/12, or -1/12, 1/12, 3/12 are selected. Jj' corresponding to two pixel repeating unit groups is selected from the following: -1/2, 0, 1/2. Next, an example is given with the Vj combination corresponding to one of the light-splitting repeating units of (0, 1/6, 2/6), the Vj combination corresponding to another light-splitting repeating unit of (1/12, 3/12, 5/12), and the Jj' combination of (0, 1/2) for illustration.

Solution 7: as shown in FIG. 18, in two adjacent light-splitting repeating units, in the first light-splitting repeating unit 03-1: the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/6)h1 relative to the first symmetry axis 017 of the sub-region 031-2, that is, H2-2=(1/6)h1. The convergence center line 016 of the light-splitting structure A3 is misaligned to the right by (2/6)h1 relative to the first symmetry axis 017 of the sub-region 031-3, that is, H2-3=(2/6)h1. In the second light-splitting repeating unit 03-2: the convergence center line 016 of the light-splitting structure A1 is misaligned to the right by 1/12 relative to the first symmetry axis 017 of the sub-region 031-1, that is, H2-1=(1/12)h1. The convergence center line 016 of the light-splitting structure A2 is misaligned to the right by (3/12)h1 relative to the first symmetry axis 017 of the sub-region 031-2, that is, H2-2=(3/12)h1. The convergence center line 016 of the light-splitting structure A3 is misaligned to the right by (5/12)h1 relative to the first symmetry axis 017 of the sub-region 031-3, that is, H2-3=(5/12)h1. The first distance between the light-splitting structure A1 and the light-splitting structure A2 in the first light-splitting repeating unit 03-1 is L1-1, the first distance between the light-splitting structure A2 and the light-splitting structure A3 in the first light-splitting repeating unit 03-1 is L1-2, the first distance between the light-splitting structure A3 in the first light-splitting repeating unit 03-1 and the light-splitting structure A1 in the second light-splitting repeating unit 03-2 is L1-3, the first distance between the light-splitting structure A1 and the light-splitting structure A2 in the second light-splitting repeating unit 03-2 is L1-4, the first distance between the light-splitting structure A2 and the light-splitting structure A3 in the second light-splitting repeating unit 03-2 is L1-5, and the first distance between the light-splitting structure A3 in the second light-splitting repeating unit 03-2 and the light-splitting structure A1 in the next light-splitting repeating unit 03 is L1-6. The width of the pixel island in the row direction and the distance H3 between two adjacent first symmetry axes are both 181.8 $\mu$m, L1-1=L1-2=L1-4=L1-5=183.69375 $\mu$m, L1-3=178.959375 $\mu$m, L1-6=177.065625 $\mu$m. The first pixel repeating unit row 013-1 has no misalignment relative to the first symmetry axis 017, that is, H1-1=0, J1=0. The second pixel repeating unit row 013-2 is misaligned to the right by (1/2)h1 relative to the first symmetry axis 017, that is, H1-2=(1/2)h1, J2=1/2, and accordingly, the second pixel repeating unit row 013-2 is misaligned to the right by (1/2)h1 relative to the first pixel repeating unit row 013-1.

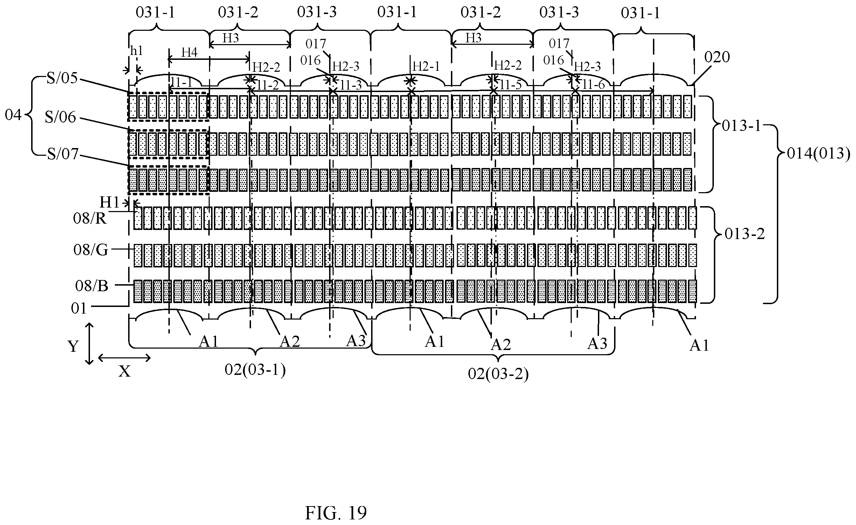

In some embodiments, as shown in FIG. 19, in two adjacent light-splitting repeating units 03, the ratio of the misalignment vector H2 of the convergence center line 016 of the light-splitting structure A of one of the light-splitting repeating units 03 in the row direction X relative to the first symmetry axis 017 to the width h1 of the sub-pixel 08 in the row direction X is $Vj=\pm C\dfrac{E''}{M}$, and the ratio of the misalignment vector H2 of the convergence center line 016 of the light-splitting structure A of another light-splitting repeating unit 03 in the row direction X relative to the first symmetry axis 017 to the width h1 of the sub-pixel 08 in the row direction X is $Vj=\pm C\dfrac{E''''}{2(M\times M')}$ .

In the pixel repeating unit group 014, the ratio of the misalignment vector H1-j of the sub-pixel 08 in the j'-th pixel repeating unit row 013 in the row direction X relative to the first symmetry axis 017 to the width h1 of the sub-pixel 08 in the row direction X is $Jj'=\pm C'\dfrac{E'''}{(M\times M')}$ .

Where, j is an integer greater than or equal to 1 and less than or equal to M, j' is an integer greater than or equal to 1 and less than or equal to M', C and C' are both integers greater than 0, E" is an integer greater than or equal to 0 and less than M, E''' is an integer greater than or equal to 0 and less than M', and E'''' is an integer greater than 0 and less than 2(M×M').

In the display device provided by the embodiments of the present disclosure, the combinations of Vj corresponding to two adjacent light-splitting repeating units are different, thereby avoiding the discontinuity of the light-emitting region formed in space by the light emitted by the sub-pixel after being split by M light-splitting structures due to the difference in the width of the sub-pixel opening region in the row direction, that is, the fluctuation of the sub-pixel opening region in the row direction, thereby avoiding the occurrence of macroscopic moiré patterns.

In some embodiments, in two adjacent light-splitting repeating units, C in Vj corresponding to each light-splitting unit is equal, and Vj corresponding to 2M light-splitting structures are not equal.

In some embodiments, in a pixel repeating unit group, Jj' corresponding to one pixel repeating unit row is 0, and Jj' corresponding to the remaining pixel repeating unit rows are not 0.

In the specific implementation, the sub-pixel opening ratio is still taken as 5/6, M=3, M'=2. The 3 light-splitting structures are A1, A2, and A3. Each light-splitting repeating unit includes 3 sub-regions 031-1, 031-2, and 031-3, A1 corresponds to 031-1, A2 corresponds to 031-2, and A3 corresponds to 031-3.

In a specific implementation, when M=3 and C=C'=1, among two adjacent light-splitting repeating units, Vj corresponding to the 3 light-splitting structures of one light-splitting repeating unit 03-1 are selected from the following:

-2/3, -1/3, 0, 1/3, 2/3, and Vj corresponding to the 3 light-splitting structures of another light-splitting repeating unit 03-2 are selected from the following: -11/12, -9/12, -7/12, -5/12, -3/12, -1/12, 1/12, 3/12, 5/12, 7/12, 9/12, 11/12, for example, 1/12, 3/12, 5/12, or -1/12, 1/12, 3/12. Jj' corresponding to two pixel repeating unit groups is selected from the following: -1/6, 0, 1/6. Next, an example is given with the Vj combination corresponding to one of the light-splitting repeating units of (0, 1/3, 2/3), the Vj combination corresponding to the other light-splitting repeating unit of (1/12, 5/12, 9/12), and the Jj' combination is (0, 1/6) for illustration.

Solution 8: As shown in FIG. 19, in two adjacent light-splitting repeating units, in the first light-splitting repeating unit 03-1: the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/3)h1 relative to the first symmetry axis 017 of the sub-region 031-2, that is, H2-2=(1/3)h1. The convergence center line 016 of the light-splitting structure A3 is misaligned to the right by (2/3)h1 relative to the first symmetry axis 017 of the sub-region 031-3, that is, H2-3=(2/3)h1. In the second light-splitting repeating unit 03-2: the convergence center line 016 of the light-splitting structure A1 is misaligned to the right by 1/12 relative to the first symmetry axis 017 of the sub-region 031-1, that is, H2-1=(1/12)h1. The convergence center line 016 of the light-splitting structure A2 is misaligned to the right by (5/12)h1 relative to the first symmetry axis 017 of the sub-region 031-2, that is, H2-2=(5/12)h1. The convergence center line 016 of the light-splitting structure A3 is misaligned to the right by (9/12)h1 relative to the first symmetry axis 017 of the sub-region 031-3, that is, H2-3=(9/12)h1. The first distance between the light-splitting structure A1 and the light-splitting structure A2 in the first light-splitting repeating unit 03-1 is L1-1, the first distance between the light-splitting structure A2 and the light-splitting structure A3 in the first light-splitting repeating unit 03-1 is L1-2, the first distance between the light-splitting structure A3 in the first light-splitting repeating unit 03-1 and the light-splitting structure A1 in the second light-splitting repeating unit 03-2 is L1-3, the first distance between the light-splitting structure A1 and the light-splitting structure A2 in the second light-splitting repeating unit 03-2 is L1-4, the first distance between the light-splitting structure A2 and the light-splitting structure A3 in the second light-splitting repeating unit 03-2 is L1-5, and the first distance between the light-splitting structure A3 in the second light-splitting repeating unit 03-2 and the light-splitting structure A1 in the next light-splitting repeating unit 03 is L1-6. The width of the pixel island in the row direction and the distance H3 between two adjacent first symmetry axes are both 181.8 $\mu$m, L1-1=L1-2=L1-4=L1-5=185.5875 $\mu$m, L1-3=175.171875 $\mu$m, and L1-6=173.278125 $\mu$m. The first pixel repeating unit row 013-1 has no misalignment relative to the first symmetry axis 017, i.e., H1-1=0, J1=0. The second pixel repeating unit row 013-2 is misaligned to the right by (1/6)h1 relative to the first symmetry axis 017, i.e., H1-2=(1/6)h1, J2=1/6, and accordingly, the second pixel repeating unit row 013-2 is misaligned to the right by (1/6)h1 relative to the first pixel repeating unit row 013-1.

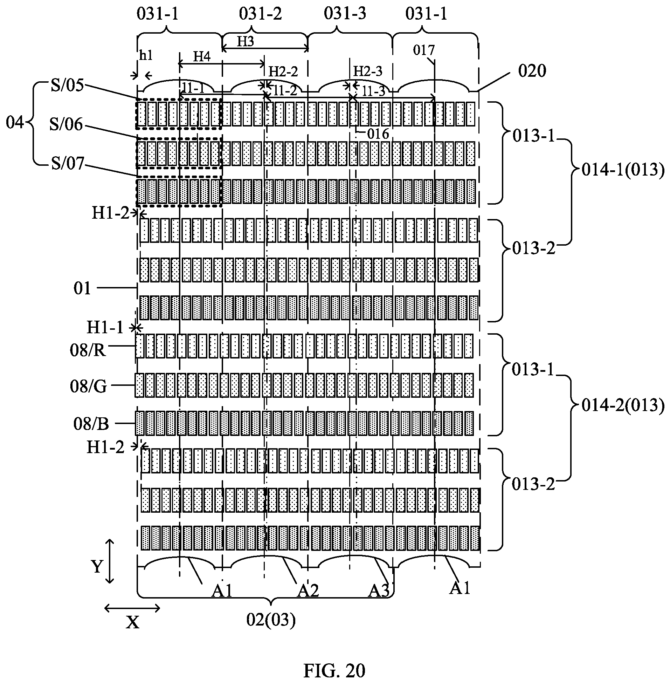

Alternatively, in some embodiments, as shown in FIG. 20, the ratio of the misalignment vector H2 of the convergence center line 016 of the light-splitting structure A of the light-splitting repeating unit 03 in the row direction X relative to the first symmetry axis 017 to the width h1 of the sub-pixel 08 in the row direction X is $Vj=\pm C\dfrac{E''}{M}$; and in the plurality of pixel repeating unit groups 014, the ratio of the misalignment vector H1 of the sub-pixels 08 in the j'-th pixel repeating unit row 013 of at least one pixel repeating unit group 014 relative to the first symmetry axis 017 in the row direction X to the width h1 of the sub-pixel 08 in the row direction X is $Jj'=\pm C'\dfrac{E''''}{2(M\times M')}$, and the ratio of the misalignment vector H1 of the sub-pixel 08 in the j'-th pixel repeating unit row 013 of the remaining pixel repeating unit groups 014 relative to the first symmetry axis 017 in the row direction X to the width h1 of the sub-pixel 08 in the row direction X is $Jj'=\pm C'\dfrac{E'''}{(M\times M')}$.

Where, j is an integer greater than or equal to 1 and less than or equal to M, j' is an integer greater than or equal to 1 and less than or equal to M', C and C' are both integers greater than 0, E'' is an integer greater than or equal to 0 and less than M, E''' is an integer greater than or equal to 0 and less than M', and E'''' is an integer greater than 0 and less than 2(M×M').

In the display device provided by the embodiments of the present disclosure, the combination of Jj' corresponding to at least some pixel repeating unit groups is different from the combination of Jj' corresponding to remaining pixel repeating unit groups, thereby avoiding the discontinuity of the light-emitting region formed in space by the g light emitted by the sub-pixel after being split by M light-splitting structures due to the difference in the width of the sub-pixel opening region in the row direction, that is, the fluctuation of the sub-pixel opening region in the row direction, thereby avoiding the occurrence of macroscopic moiré patterns.

In some embodiments, in each light-splitting repeating unit, the Vj corresponding to the M light-splitting structures are not equal. The Vj corresponding to the j-th light-splitting structures in different light-splitting repeating units are all equal. In a light-splitting repeating unit, the C in the Vj corresponding to each light-splitting structure is equal. In a light-splitting repeating unit, the Vj corresponding to one light-splitting structure is 0, the Vj corresponding to the remaining light-splitting structures is not 0, and the Vj corresponding to the remaining light-splitting structures are not equal.

In some embodiments, in the pixel repeating unit group of $Jj'=\pm C'\frac{E'''}{(M\times M')}$, Jj' corresponding to one pixel repeating unit row is 0, and Jj' corresponding to the remaining pixel repeating unit rows are not 0. Jj' corresponding to any pixel repeating unit row in the pixel repeating unit group of $Jj'=\pm C'\frac{E'''}{(M\times M')}$ is not equal to Jj' corresponding to any pixel repeating unit row in the pixel repeating unit group of $Jj'=\pm C'\frac{E''''}{2(M\times M')}$.

In a specific implementation, for example, the ratio of the misalignment vector of the sub-pixel in the pixel repeating unit row of the second pixel repeating unit group relative to the first symmetry axis in the row direction to the width of the sub-pixel in the row direction is $Jj'=\pm C'\frac{E''''}{2(M\times M')}$. The ratio of the misalignment vector of the sub-pixel in the pixel repeating unit row of the remaining pixel repeating unit groups relative to the first symmetry axis in the row direction to the width of the sub-pixel in the row direction is $Jj'=\pm C'\frac{E'''}{(M\times M')}$.

In the specific implementation, the sub-pixel opening ratio is still taken as 5/6, M=3, M'=2. The 3 light-splitting structures are A1, A2, and A3. Each light-splitting repeating unit includes 3 sub-regions 031-1, 031-2, and 031-3, A1 corresponds to 031-1, A2 corresponds to 031-2, and A3 corresponds to 031-3.

In a specific implementation, when M=3, and C=C'=1, Vj corresponding to the 3 light-splitting structures are selected from the following: -2/3, -1/3, 0, 1/3, 2/3. The Jj' corresponding to the second pixel repeating unit group is selected from the following: -11/12, -9/12, -7/12, -5/12, -3/12, -1/12, 1/12, 3/12, 5/12, 7/12, 9/12, 11/12. The Jj' corresponding to the remaining pixel repeating unit groups is selected from the following: -1/6, 0, 1/6. Next, an example is given in which the Vj combination is (0, 1/3, 2/3), the Jj' combination corresponding to the second pixel repeating unit group is (-1/12, 1/12), and the Jj' combination corresponding to the remaining pixel repeating unit groups is (0, 1/6).

Solution 9: as shown in FIG. 20, the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/3)h1 relative to the first symmetry axis 017 of the sub-region 031-2, that is, H2-2=(1/3)h1. The convergence center line 016 of the light-splitting structure A3 is misaligned to the right by (2/3)h1 relative to the first symmetry axis 017 of the sub-region 031-3, that is, H2-3=(2/3)h1. In the second pixel repeating unit group 014-2, the first pixel repeating unit row 013-1 is misaligned to the left by (-1/12)h1 relative to the first symmetry axis 017, that is, H1-1=-1/12 in the pixel repeating unit group, and the second pixel repeating unit row 013-2 is misaligned to the left and right by (1/12)h1 relative to the first symmetry axis 017, that is, H1-12=1/12 in the pixel repeating unit group. In the remaining pixel repeating unit groups 014 (taking the first pixel repeating unit group 014-1 as an example), the first pixel repeating unit row 013-1 is not misaligned relative to the first symmetry axis 017, that is, H1-1=0, J1=0. The second pixel repeating unit row 013-2 is misaligned to the right by (1/6)h1 relative to the first symmetry axis 017, that is, H1-2=(1/6)h1, J2=1/6, Correspondingly, the second pixel repeating unit row 013 - 2 is misaligned to the right by (1/6)h1 relative to the first pixel repeating unit row 013 - 1.

It should be noted that in FIGS. 1, 9, and 13 to 20, K/M is an integer. When K/M is an integer, the resolution of the display device can be a standard resolution. In the case of standard resolution, there is no need to design a new arrangement method of the display device, which can achieve the goal of alleviating moiré patterns while avoiding increasing the difficulty of display device design.

It should be noted that FIG. 1, in FIG. 9, and FIG. 13 to FIG. 20, M=K is taken as an example for illustration. In a specific implementation, when N/M is an integer and K/M is an integer, K may be greater than M, that is, one light-splitting structure corresponds to a plurality of pixel islands in a pixel repeating unit row. When K/M is an integer and K is greater than M, it is beneficial to increase the angle of the main lobe viewing angle, thereby facilitating multi-person viewing.

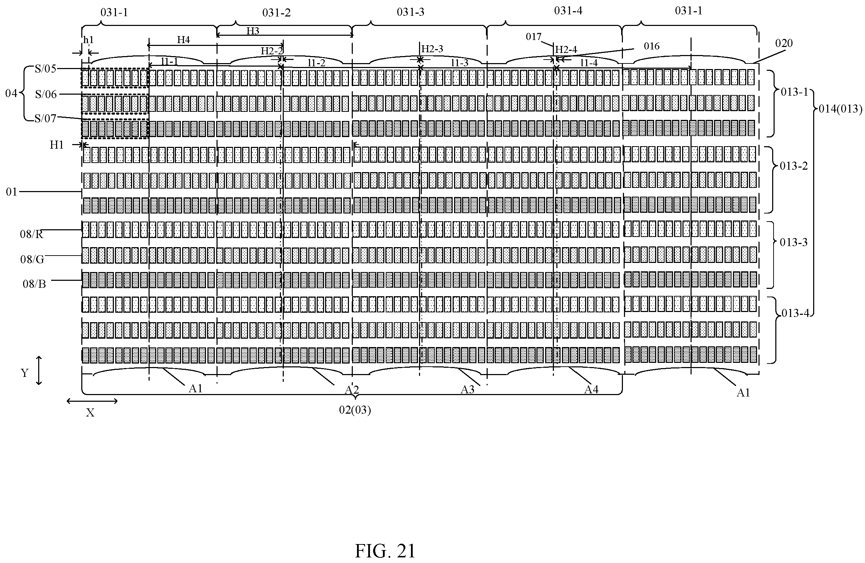

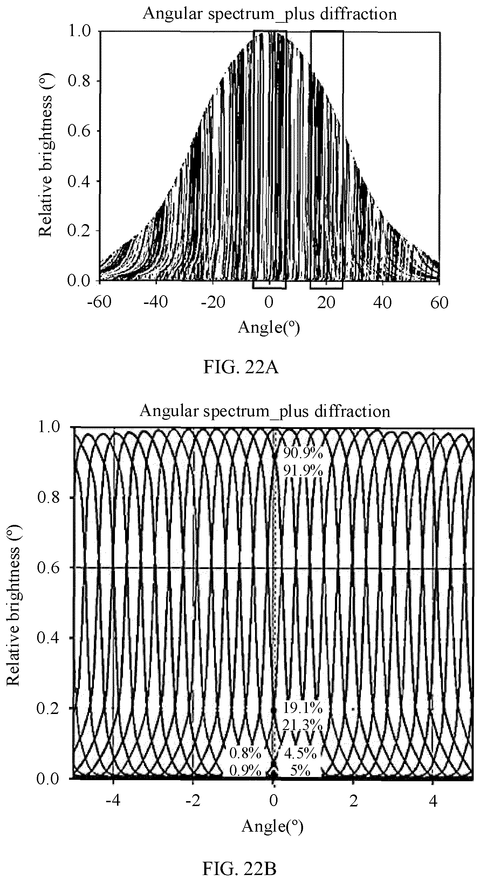

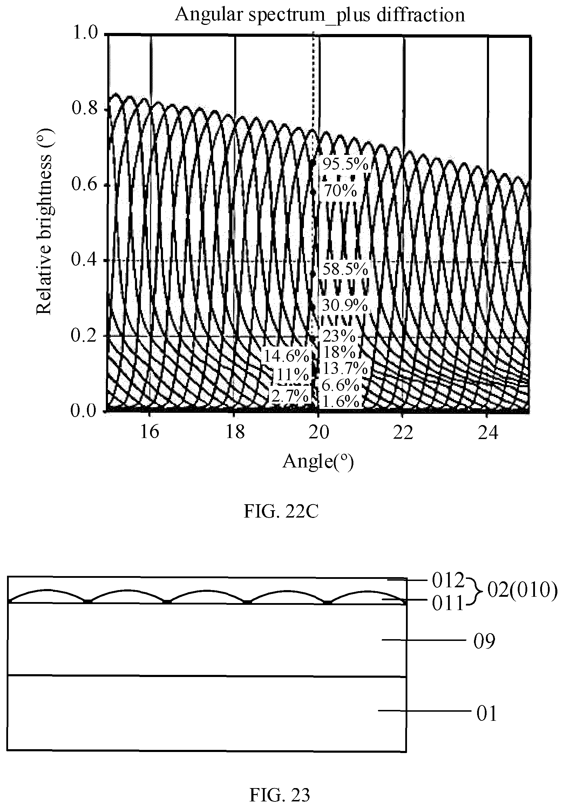

For example, as shown in FIG. 21, 2M=K, that is, one light-splitting structure A corresponds to two pixel islands S arranged along the row direction X in one pixel repeating unit row 013. M=4, K=8. The width of the pixel island S in the row direction X is 181.8 $\mu$m. The convergence center line 016 of the light-splitting structure A1 is not misaligned relative to the first symmetry axis 017 of the sub-region 031-1, that is, H2-1=0. The convergence center line 016 of the light-splitting structure A2 is misaligned to the left by (1/4)h1 relative to the first symmetry axis 017 of the sub-region 031-2, that is, H2-2= (-1/4)h1. The convergence center line 016 of the light-splitting structure A3 is misaligned to the right by (1/4)h1 relative to the first symmetry axis 017 of the sub-region 031-3, that is, H2-3=(1/4)h1. The convergence center line 016 of the light-splitting structure A4 is misaligned to the right by (2/4)h1 relative to the first symmetry axis 017 of the sub-region 031-4, that is, H2-2=(2/4)h1. The first distance between adjacent light-splitting structures A1 and A2 is L1-1, the first distance between adjacent light-splitting structures A2 and A3 is L1-2, the first distance between adjacent light-splitting structures A3 and A4 is L1-3, and the first distance between adjacent light-splitting structures A4 and A1 is L1-4. L1-1, L1-2, L1-3, and L1-4 are not equal, L1-1 = 360.759375 $\mu$m, L1-2 = 369.28125 $\mu$m, L1-3 = 366.440625 $\mu$m, and L1-4 = 357.91875 $\mu$m. The sub-pixels in the second pixel repeating unit row 013-2 are misaligned to the left by (-1/8)h1 relative to the sub-pixels in the remaining second pixel repeating unit rows 013. Taking the light-splitting structure as a liquid crystal lens as an example (the liquid crystal refractive index $n_e$-$n_o$ =1.81-1.51=0.3), the liquid crystal lens is designed with an aperture of 143.6μm, an arch height of 19.18μm, and a placement height of 700μm, and the light-emitting angular spectrum of each sub-pixel is obtained as shown in FIGS. 22A, 22B, and 22C (FIG. 22B is a partial enlarged view of FIG. 22A at a positive viewing angle, and FIG. 22C is a partial enlarged view of FIG. 22A at a viewing angle of 20°). When the human eyes is 1000 mm away from the screen and viewing the center of the screen, it is a positive viewing angle, as shown in FIG. 22B, and each level has -4 to +4 levels of crosstalk, with values of 0.8%/4.5%/19.1%/90.9%/100%/91.9%/21.3%/5%/0.9%. When viewing the edge of the screen, the viewing angle is ±20°, as shown in FIG. 22C, and each level has -10 to +2 levels of crosstalk, with values of 1.6%/2.7%/6.6%/11%/13.7%/14.6%/18%/23%/30.9%/70%/100%/95.5%/58.5%. It can be seen that the crosstalk drops rapidly after positive or negative level 1, and the left and right eyes are separated by 10 levels. Combined with the left and right eye 3D arrangement, a better 3D effect can be achieved, thereby enabling multi-person to watch.

In a specific implementations, as shown in FIG. 1, FIG. 9, and FIG. 13 to FIG. 21, when N/M is an integer and K/M is an integer, the distance between any two adjacent light-splitting structures A in the row direction X is greater than 0. That is, the two adjacent light-splitting structures A are not closely connected.

That is, compared with the case where two adjacent light-splitting structures A are in close contact, the opening ratio of the light-splitting structure in the display device provided by the embodiment of the present disclosure is smaller.

It should be noted that, taking a cylindrical lens as an example, the calculation formula for the main lobe viewing angle ω is:

$$\omega \approx 2\arctan\left(\frac{P/2}{T/n}\right) = 2\arctan\left(\frac{f}{T/2}*\frac{P}{D}*\frac{D/2}{f}\right) = 2\arctan\left[\frac{f}{T/2}*\frac{P}{D}*\frac{(n_1-n_2)D/2}{r}\right] = 2\arctan\left[k*\frac{1}{O}*(n_1-n_2)*\sin\theta\right].$$

Among them, P is the width of a pixel island in the row direction, T is the placement height of the cylindrical lens, k is the defocus amount of the cylindrical lens, expressed as $k = \frac{f}{T/n}$, where f is the focal length of the cylindrical lens, O is the opening ratio of the cylindrical lens, and D is the aperture of the cylindrical lens, n1-n2 is the refractive index difference, where n1 is the refractive index of the cylindrical lens, and n2 is the refractive index of the medium in contact with one side of the cylindrical lens, and θ is the slope angle of the cylindrical lens.

According to the calculation formula of the main lobe viewing angle ω, when the light-splitting structure is a cylindrical lens, reducing the opening ratio of the cylindrical lens can increase the main lobe viewing angle ω, making it easier for multi-person to watch.

In some embodiments, as shown in FIG. 1, FIG. 9, and FIG. 13 to FIG. 21, the light-splitting component 02 further includes a light-shielding portion 020 located between the light-splitting structures A.

In some embodiments, when the light-splitting structures are not closely connected, the widths of the light-splitting structures in the row direction are equal.

In some embodiments, as shown in FIG. 23, the cylindrical lens 010 includes a first resin layer 011 having a protrusion, and a planarization resin layer 012 located on a side of the first resin layer 011 facing away from the display panel 01. The refractive index of the planarization resin layer 012 is less than the refractive index of the first resin layer 011.

In some embodiments, as shown in FIG. 23, the display device further includes: a spacer dielectric layer 09, located between the light-splitting component 02 and the display panel 01.

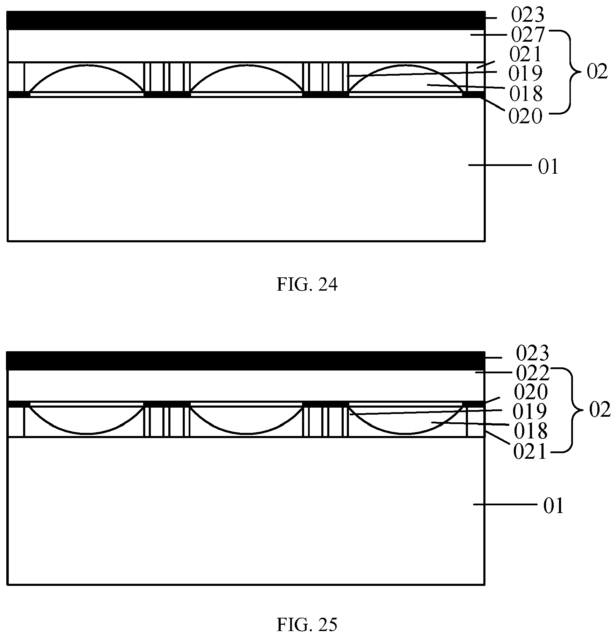

In some embodiments, when the light-splitting structure is a geometric lens, as shown in FIGS. 24 to 26, the light-splitting component 02 includes, in addition to the geometric lens 018 and the light-shielding portion 020, a supporting portion 019 and a packaging portion 021.

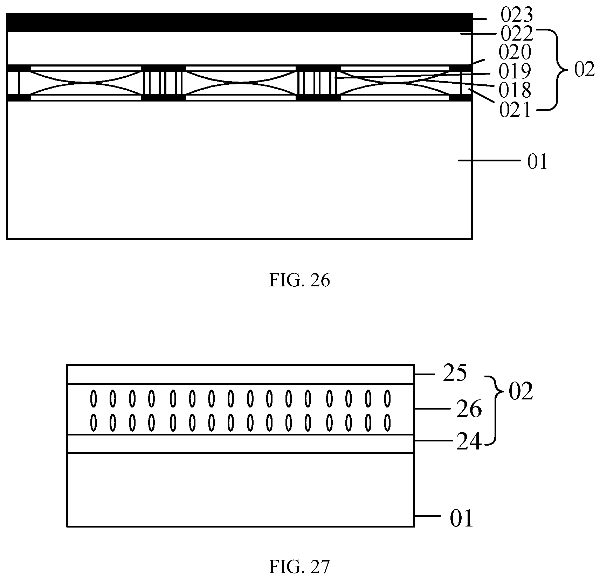

In a specific implementation, the geometric lens 018 included in the light-splitting component 02 can be an upright geometric lens as shown in FIG. 24, or an inverted geometric lens as shown in FIG. 25, or a superposition of an upright geometric lens and an inverted geometric lens as shown in FIG. 26.

In a specific implementation, the upright geometric lens can directly use the display panel 01 as a substrate, that is, directly set the geometric lens on one side of the display panel, as shown in FIG. 24, and the light-splitting component 02 also includes a covering layer 027. When the geometric lens 018 included in the light-splitting component 02 is an inverted geometric lens, as shown in FIG. 25 and FIG. 26, the inverted geometric lens needs to be set on one side of the base substrate 022. In a specific implementation, when the display panel is a liquid crystal display panel, the upper polarizer 023 is located on the side of the light-splitting component 02 away from the display panel 01.

In some embodiments, the light-splitting structure is a liquid crystal lens. As shown in FIG. 27, the light-splitting component 02 includes an upper substrate 024 and a lower substrate 025 disposed opposite to each other, and a liquid crystal layer 026 located between the upper substrate 024 and the lower substrate 025. The upper polarizer 023 is located between the light-splitting component 02 and the display panel 01.

In a specific implementation, the upper substrate includes a plurality of strip electrodes extending along the column direction, and the lower substrate includes a planar electrode disposed on the entire surface.

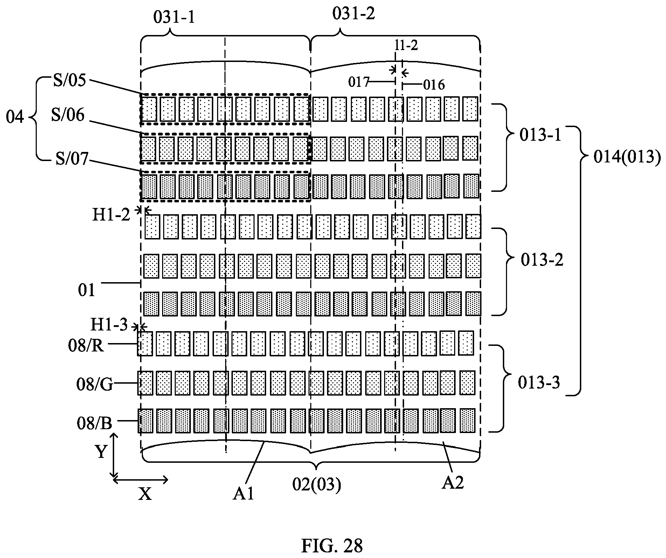

Of course, in some embodiments, as shown in FIG. 28, the distance between any two adjacent light-splitting structures A in the row direction x is equal to 0, that is, the light-splitting structures are closely connected.

It should be noted that, when the light-splitting structures are closely connected, the setting method of Vj corresponding to the M light-splitting structures in the light-splitting repeating unit and the setting method of Jj corresponding to the pixel repeating unit group are the same as those in the embodiment where N/M is an integer. For example, it can be that $Vj=\pm C\frac{E}{M}$, and the Jj corresponding to each pixel repeating unit group is 0. Or, it can be that $Vj=\pm C\frac{E}{M}$, one pixel repeating unit group corresponds to $Jj=\pm C\frac{1}{2M}$, and the Jj corresponding to the remaining pixel repeating unit groups are all 0. Or, it can be that Vj corresponding to the M light-splitting structures in the light-splitting repeating unit is 0, and the pixel repeating unit group corresponds to $Jj=\pm C\frac{E'}{M}$. or, it can be that at least one light-splitting structure in the light-splitting repeating unit corresponds to $Vj=\pm\frac{1}{2M}$, and the Vj corresponding to the remaining light-splitting structures is 0. Or, it can be that the M light-splitting structures in the light-splitting repeating unit correspond to $Vj=\pm C\frac{E''}{(M\times M')}$, and the pixel repeating unit group corresponds to $Jj'=\pm C'\frac{E'''}{M'}$. Or, it can be that the M light-splitting structures in the light-splitting repeating unit correspond to $Vj=\pm C\frac{E''}{M}$, and the pixel repeating unit group corresponds to $Jj'=\pm C'\frac{E'''}{(M\times M')}$. Or, it can be that the light-splitting structure in the light-splitting repeating unit corresponds to $Vj=\pm C\frac{E''}{(M\times M')}$, and among multiple pixel repeating unit groups, at least one pixel repeating unit group corresponds to $Jj'=\pm C'\frac{E''''}{2(M\times M')}$, and the remaining pixel repeating unit groups correspond to $Jj'=\pm C'\frac{E'''}{M'}$. Or, am0ong two adjacent light-splitting repeating units, one of the light-splitting repeating units corresponds to $Vj=\pm C\frac{E''}{(M\times M')}$, and another light-splitting repeating unit corresponds to $Vj=\pm C\frac{E''''}{2(M\times M')}$; and the pixel repeating unit group corresponds to $Jj'=\pm C'\frac{E'''}{M'}$. Or, among two adjacent light-splitting repeating units, the light-splitting structure of one light-splitting repeating unit corresponds to $Vj=\pm C\frac{E''}{M}$, and the light-splitting structure of another light-splitting repeating unit corresponds to $Vj=\pm C\frac{E''''}{2(M\times M')}$; and the pixel repeating unit group corresponds to $Jj'=\pm C'\frac{E'''}{(M\times M')}$. Or, it can also be that the light-splitting structure of the light-splitting repeating unit corresponds to $Vj=\pm C\frac{E''}{M}$, and among multiple pixel repeating unit groups, at least one pixel repeating unit group corresponds to $Jj'=\pm C'\frac{E''''}{2(M\times M')}$, and the remaining pixel repeating unit groups correspond to $Jj'=\pm C'\frac{E'''}{(M\times M')}$.

In a specific implementation, when the light-splitting structures are closely connected, N and M may be mutually prime. In a specific implementation, when M light-splitting structures correspond to K pixel islands, K/M is an integer.

Next, an example is given for explanation. The opening ratio of the sub-pixel is 5/6, that is, M×M'=6, M=2, M'=3. N=9, K/M=2. The Vj corresponding to the two light-splitting structures A are selected from the following: -1/2, 0, 1/2. In each pixel repeating unit group, the Jj' corresponding to the pixel repeating unit row are selected from one of the following: -2/6, -1/6, 0, 1/6, 2/6. The Vj combination is (0, 1/2), and the Jj' combination is (-1/6, 0, 1/6). In FIG. 28, the convergence center line 016 of the light-splitting structure A1 is not misaligned relative to the first symmetry axis 017 of the sub-region 031-1, that is, H2-1=0. The convergence center line 016 of the light-splitting structure A2 is misaligned to the right by (1/2)h1 relative to the first symmetry axis 017 of the sub-region 031-2, that is, H2-2=(1/2)h1. The first pixel repeating unit row 013-1 is not misaligned relative to the first symmetry axis 017, that is, H1-1=0, J1=0. The second pixel repeating unit row 013-2 is misaligned to the right by (1/6)h1 relative to the first symmetry axis 017, that is, H1-2=(1/6)h1, J2=1/6. The third pixel repeating unit row 013-3 is misaligned to the left by (1/6)h1 relative to the first symmetry axis 017, that is, H1-23=-(1/6)h1, J3=-1/6.

In a specific implementation, when the light-splitting structures are closely connected, the widths of the multiple light-splitting structures included in the light-splitting component in the row direction are all equal.

The display device provided in the embodiments of the present disclosure is any product or component with a display function, such as a mobile phone, a tablet computer, a television, a display, a laptop computer, a digital photo frame, a navigator, etc. Other essential components of the display device should be understood by those skilled in the art, and will not be described in detail here, nor should they be used as a limitation to the present disclosure.

In summary, in the display device provided by the embodiments of the present disclosure, at least some sub-pixels in two adjacent pixel repeating unit rows are arranged in a misaligned manner in the row direction, and/or at least some of the first distances are not equal, so that a single pixel repeating unit row does not constitute a repeating unit of the pixel repeating unit row arrangement, and/or a single light-splitting structure does not constitute a repeating unit of the light-splitting structure arrangement. Compared with the case where the sub-pixels are not arranged in a misaligned manner or the light-splitting structures are not arranged in a misaligned manner, the "black region" in space after the light rays emitted by the N columns of sub-pixels are split by the M light-splitting structures above them can be blocked, thereby preventing the human eyes from seeing the "black region" when moving in the visible space, and can alleviate the problem of macroscopic moiré pattern.

Although the preferred embodiments of the present invention have been described, those skilled in the art may make other changes and modifications to these embodiments once they have learned the basic creative concept. Therefore, the appended claims are intended to be interpreted as including the preferred embodiments and all changes and modifications that fall within the scope of the present invention.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

**Claims**

1. A display device, comprising:

   a display panel, comprising: a plurality of pixel repeating units arranged in an array along a row direction and a column direction; wherein each of the pixel repeating units comprises a plurality of pixel islands arranged continuously in the column direction; each of the pixel islands comprises a plurality of sub-pixels arranged at intervals along the row direction; and the plurality of pixel repeating units comprise a plurality of pixel repeating unit rows arranged along the column direction; and
   a light-splitting component, located on a display side of the display panel; wherein the light-splitting component comprises a plurality of light-splitting repeating units extending along the column direction and arranged continuously along the row direction; the light-splitting repeating unit comprises M light-splitting structures extending along the column direction and arranged continuously along the row direction; each of the light-splitting repeating units corresponds to N columns of sub-pixels in the pixel repeating unit rows; M and N are both integers greater than 1; and the light-splitting structure has a convergence center line extending along the column direction, and a distance between the convergence center lines of two light-splitting structures that are adjacent to each other is a first distance;
   wherein at least some sub-pixels in two the pixel repeating unit rows that are adjacent to each other are misaligned in the row direction; and/or, at least some of the multiple first distances corresponding to the M light-splitting structures are not equal.

2. The display device according to claim 1, wherein: the light-splitting repeating units are evenly divided into M sub-regions, the sub-regions correspond one-to-one to the light-splitting structures, and the sub-region has a first symmetry axis extending along the column direction; and in the row direction, a width of the light-splitting repeating unit is equal to a width of the N columns of sub-pixels in the pixel repeating unit rows.

3. The display device according to claim 2, wherein: each of the pixel islands comprises n sub-pixels arranged at intervals along the row direction; wherein n is an integer greater than 1; the sub-pixel comprises a sub-pixel opening region; and in the row direction, a ratio of a total width of n sub-pixel opening regions to a width of the pixel island is greater than or equal to 0.9/M and less than or equal to 1.

4. The display device according to claim 3, wherein: in the row direction, a ratio of the total width of the n sub-pixel opening regions to the width of the pixel island is i/M; wherein i is an integer greater than or equal to 1 and less than or equal to M-1.

5. The display device according to claim 3 or 4, wherein: in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E}{M}$, wherein j is an integer greater than or equal to 1 and less than or equal to M, C is an integer greater than 0, and E is an integer greater than or equal to 0 and less than M.

6. The display device according to claim 5, wherein C=1; and in each of the light-splitting repeating units, multiple Vj corresponding to the M light-splitting structures form an arithmetic progression, and a common difference of the arithmetic progression is 1/M.

7. The display device according to claim 6, wherein centers of the sub-pixels in a same one column in any two pixel repeating unit rows that are adjacent to each other are located on a same one straight line in the column direction.

8. The display device according to claim 6, wherein a ratio of a misalignment vector of the sub-pixels in at least one pixel repeating unit row relative to the first symmetry axis in the row direction to the width of the sub-pixel in the row direction is $Jj=\pm C\frac{1}{2M}$.

9. The display device according to claim 8, wherein a ratio of a misalignment vector of the sub-pixels in a 2-nd pixel repeating unit row in the column direction relative to the first symmetry axis in the row direction to the width of the sub-pixel in the row direction is $Jj=\pm\frac{1}{2M}$.

10. The display device according to claim 3 or 4, wherein the plurality of pixel repeating unit rows are divided into a plurality of pixel repeating unit groups, each of the pixel repeating unit groups comprising M pixel repeating unit rows; and in the pixel repeating unit group, a ratio of a misalignment vector of the sub-pixels in a j-th pixel repeating unit row relative to the first symmetry axis in the row direction to a width of the sub-pixel in the row direction is $Jj=\pm C\frac{E'}{M}$, wherein j is an integer greater than or equal to 1 and less than or equal to M, C is an integer greater than 0, and E' is an integer greater than or equal to 0 and less than M.

11. The display device according to claim 10, wherein C=1; and in each of the pixel repeating unit groups, multiple Jj corresponding to the M pixel repeating unit rows form an arithmetic progression, and a common difference of the arithmetic progression is 1/M.

12. The display device according to claim 10, wherein the convergence center line coincides with the first symmetry axis.

13. The display device according to claim 10, wherein in each of the light-splitting repeating units, a ratio of a misalignment vector of the convergence center line of at least one structure relative to the first symmetry axis in the row direction to a width of the sub-pixel in the row direction is $Vj=\pm C\frac{1}{2M}$.

14. The display device according to claim 13, wherein in each of the light-splitting repeating units, a ratio of a misalignment vector of the convergence center line of a 2-nd light-splitting structure relative to the first symmetry axis in the row direction to the width of the sub-pixel in the row direction is $Vj=\pm\frac{1}{2M}$.

15. The display device according to claim 2, wherein each of the pixel islands comprises n sub-pixels arranged at intervals along the row direction; wherein n is an integer greater than 1; the sub-pixel comprises a sub-pixel opening region; and in the row direction, a ratio of a total width of n sub-pixel opening regions to a width of the pixel island is greater than or equal to 0.9/(M×M') and less than or equal to 1.

16. The display device according to claim 15, wherein, in the row direction, a ratio of the total width of the n sub-pixel opening regions to the width of the pixel island is i/(M×M'); wherein i is an integer greater than or equal to 1 and less than or equal to M×M'-1.

17. The display device according to claim 15 or 16, wherein the plurality of pixel repeating unit rows are divided into a plurality of pixel repeating unit groups, each of the pixel repeating unit groups comprising M' pixel repeating unit rows;

in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E''}{(M\times M')}$ ; and

in the pixel repeating unit group, a ratio of a misalignment vector of the sub-pixels in a j'-th pixel repeating unit row relative to the first symmetry axis in the row direction to the width of the sub-pixel in the row direction is $Jj'=\pm C'\frac{E'''}{M'}$ ;

wherein j is an integer greater than or equal to 1 and less than or equal to M, j' is an integer greater than or equal to 1 and less than or equal to M', C and C' are both integers greater than 0, E" is an integer greater than or equal to 0 and less than M, and E''' is an integer greater than or equal to 0 and less than M'.

18. The display device according to claim 17, wherein in each of the light-splitting repeating units, multiple Vj corresponding to the M light-splitting structures form an arithmetic progression with a common difference being 1/(M×M'); and in each of the pixel repeating unit groups, multiple Jj' corresponding to the M' pixel repeating unit rows form an arithmetic progression with a common difference being 1/M'.

19. The display device according to claim 15 or 16, wherein the plurality of pixel repeating unit rows are divided into a plurality of pixel repeating unit groups, each of the pixel repeating unit groups comprising M' pixel repeating unit rows;

in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E''}{M}$ ; and

in the pixel repeating unit group, a ratio of a misalignment vector of the sub-pixels in a j'-th pixel repeating unit row relative to the first symmetry axis in the row direction to the width of the sub-pixel in the row direction is

$Jj'=\pm C'\frac{E'''}{(M\times M')}$ ;

wherein, j is an integer greater than or equal to 1 and less than or equal to M, j' is an integer greater than or equal to 1 and less than or equal to M', C and C' are both integers greater than 0, E" is an integer greater than or equal to 0 and less than M, and E''' is an integer greater than or equal to 0 and less than M'.

20. The display device according to claim 19, wherein in each of the light-splitting repeating units, multiple Vj corresponding to the M light-splitting structures form an arithmetic progression with a common difference being 1/M; and in each of the pixel repeating unit groups, multiple Jj corresponding to the M' pixel repeating unit rows form an arithmetic progression with a common difference being 1/(M×M').

21. The display device according to claim 15 or 16, wherein the plurality of pixel repeating unit rows are divided into a plurality of pixel repeating unit groups, each of the pixel repeating unit groups comprising M' pixel repeating unit rows;

in the light-splitting repeating unit, a ratio of a misalignment vector of the convergence center line of a j-th light-splitting structure relative to the first symmetry axis in the row direction to a width of the sub-pixel in the row direction is $Vj=\pm C\frac{E''}{(M\times M')}$ ; and

a ratio of a misalignment vector of the sub-pixels in the pixel repeating unit row of at least one of the plurality of pixel repeating unit groups relative to the first symmetry axis in the row direction to the width of the sub-pixel in the row direction is $Jj'=\pm C'\frac{E''''}{2(M\times M')}$ , and a ratio of a misalignment vector of the sub-pixels in the pixel repeating unit rows of remaining pixel repeating unit groups of the plurality of pixel repeating unit groups relative to the first symmetry axis in the row direction to the width of the sub-pixel in the row direction is $Jj'=\pm C'\frac{E'''}{M'}$ ;

or,

in two light-splitting repeating units that are adjacent to each other, a ratio of a misalignment vector of the convergence center line of a j-th light-splitting structure of one light-splitting repeating unit relative to the first symmetry axis in the row direction to a width of the sub-pixel in the row direction is $Vj=\pm C\frac{E''}{(M\times M')}$ , and a ratio of a misalignment vector of the convergence center line of a j-th light-splitting structure of another light-splitting repeating unit relative to the first symmetry axis in the row direction to the width of the sub-pixel in the row direction is $Vj=\pm C\frac{E''''}{2(M\times M')}$ ; and

in the pixel repeating unit group, a ratio of a misalignment vector of the sub-pixels in the pixel repeating unit row relative to the first symmetry axis in the row direction to the width of the sub-pixel in the row direction is $Jj'=\pm C'\frac{E'''}{M'}$;

wherein, j is an integer greater than or equal to 1 and less than or equal to M, j' is an integer greater than or equal to 1 and less than or equal to M', C and C' are both integers greater than 0, E" is an integer greater than or equal to 0 and less than M, E''' is an integer greater than or equal to 0 and less than M', and E'''' is an integer greater than 0 and less than 2(M×M').

22. The display device according to claim 15 or 16, wherein the plurality of pixel repeating unit rows are divided into a plurality of pixel repeating unit groups, each of the pixel repeating unit groups comprising M' pixel repeating unit rows;

in two light-splitting repeating units that are adjacent to each other, a ratio of a misalignment vector of the convergence center line of the light-splitting structure of one light-splitting repeating unit relative to the first symmetry axis in the row direction to a width of the sub-pixel in the row direction is $Vj=\pm C\frac{E''}{M}$ , and a ratio of a misalignment vector of the convergence center line of the light-splitting structure of another light-splitting repeating unit relative to the first symmetry axis in the row direction to the width of the sub-pixel in the row direction is $Vj=\pm C\frac{E''''}{2(M\times M')}$ ; and

in the pixel repeating unit group, a ratio of a misalignment vector of the sub-pixels in a j'-th pixel repeating unit row relative to the first symmetry axis in the row direction to the width of the sub-pixel in the row direction is

$Jj'=\pm C'\frac{E'''}{(M\times M')}$ ;

or,

a ratio of a misalignment vector of the convergence center line of the light-splitting structure of the light-splitting repeating unit relative to the first symmetry axis in the row direction to a width of the sub-pixel in the row direction is $Vj=\pm C\frac{E''}{M}$ ; and in the plurality of pixel repeating unit groups, a ratio of a misalignment vector of the sub-pixels in a j'-th pixel repeating unit row of at least one of the plurality of pixel repeating unit groups relative to the first symmetry axis in the row direction to the width of the sub-pixel in the row direction is $Jj'=\pm C'\frac{E''''}{2(M\times M')}$ , and a ratio of a misalignment vector of the sub-pixels in the j'-th pixel repeating unit rows of remaining pixel repeating unit groups relative to the first symmetry axis in the row direction to the width of the sub-pixel in the row direction is

$Jj'=\pm C'\frac{E'''}{(M\times M')}$ ;

wherein, j is an integer greater than or equal to 1 and less than or equal to M, j' is an integer greater than or equal to 1 and less than or equal to M', C and C' are both integers greater than 0, E" is an integer greater than or equal to 0 and less than M, E''' is an integer greater than or equal to 0 and less than M', and E'''' is an integer greater than 0 and less than 2(M×M').

23. The display device according to any one of claims 1 to 4, 6 to 9, 11, 14 to 16, 18, and 20, wherein widths of multiple light-splitting structures comprised in the light-splitting component in the row direction are all the same; and a distance between any two light-splitting structures that are adjacent to each other in the row direction is greater than 0.

24. The display device according to claim 23, wherein the light-splitting component further comprises a light-shielding portion between the light-splitting structures.

25. The display device according to claim 24, wherein N/M is an integer.

26. The display device according to claim 25, wherein each of the light-splitting repeating units corresponds to K columns of pixel islands in the pixel repeating unit rows, wherein K is an integer greater than 1, and K/M is an integer.

27. The display device according to any one of claims 1, 4, 6 to 9, 11, 14 to 16, 18, and 20, wherein a distance between any two light-splitting structures that are adjacent to each other in the row direction is equal to 0.

28. The display device according to claim 27, wherein M and N are mutually prime.

29. The display device according to claim 28, wherein each of the light-splitting repeating units corresponds to K columns of pixel islands in the pixel repeating unit rows, wherein K is an integer greater than 1, and M/K is an integer.

30. The display device according to any one of claims 1, 4, 6 to 9, 11, 14 to 16, 18, and 20, wherein the light-splitting structure is one of the following: a geometric lens, a diffraction lens, a liquid crystal lens, or a liquid lens.

FIG. 1

FIG. 2

FIG. 3

FIG. 4

16 15 14 13 12 11 10 9 8 7 6 5 4 3 2 1

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

EP 4 633 132 A1

FIG. 20

FIG. 21

Angular spectrum_plus diffraction

FIG. 22A

Angular spectrum_plus diffraction

FIG. 22B

## Angular spectrum_plus diffraction

FIG. 22C

FIG. 23

FIG. 24

FIG. 25

023
022
020
019
018
021
02

01

FIG. 26

25
26
24
02

01

FIG. 27

FIG. 28

## INTERNATIONAL SEARCH REPORT

| International application No. |
| --- |
| **PCT/CN2023/130618** |

| A. | CLASSIFICATION OF SUBJECT MATTER |
| --- | --- |

H04N13/305(2018.01)i; G09G3/34(2006.01)i; G09F9/33(2006.01)n; G02B30/27(2020.01)n

According to International Patent Classification (IPC) or to both national classification and IPC

| B. | FIELDS SEARCHED |
| --- | --- |

Minimum documentation searched (classification system followed by classification symbols)

IPC:H04N13/-、G09G3/-、G09F9/-、G02B30/-

Documentation searched other than minimum documentation to the extent that such documents are included in the fields searched

Electronic data base consulted during the international search (name of data base and, where practicable, search terms used)

CNTXT, ENTXT, ENTXTC, VEN: "X"方向, "Y"方向, 暗区, 错开, 错位, 等, 第1方向, 第2方向, 第二方向, 第一方向, 非, 分光, 黑区, 画素, 绘素, 间隔, 间距, 间隙, 距离, 摩尔纹, 偏离, 偏移, 透镜, 位移, 相错, 像素, 象素, 行方向, 一致, 重复, distance, gap, interval, differ+, malpos+, inconsist+, misplac+, inconform+, dislocat+, split+, lens+, unequal+, var+, dissim+, disaff+, inconsonat+, unsame+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115951506 A (BEIJING BOE TECHNOLOGY DEVELOPMENT CO., LTD. et al.) 11 April 2023 (2023-04-11)<br>claims 1-30, description, paragraphs [0002]-[0265], and figures 1-28 | 1-30 |
| X | CN 103945203 A (SHANGHAI TIANMA MICROELECTRONICS CO., LTD. et al.) 23 July 2014 (2014-07-23)<br>description, paragraphs [0026]-[0156], and figures 1-17 | 1-4, 10-12, 15-16, 23-30 |
| A | CN 107942525 A (ZHANGJIAGANG KANGDE XIN OPTRONICS MATERIAL CO., LTD.) 20 April 2018 (2018-04-20)<br>entire document | 1-30 |
| A | CN 114902125 A (BOE TECHNOLOGY GROUP CO., LTD.) 12 August 2022 (2022-08-12)<br>entire document | 1-30 |
| A | CN 115220241 A (BOE TECHNOLOGY GROUP CO., LTD.) 21 October 2022 (2022-10-21)<br>entire document | 1-30 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 January 2024** | **24 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/130618** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 216249824 U (BOE TECHNOLOGY GROUP CO., LTD.) 08 April 2022 (2022-04-08) entire document | 1-30 |
| A | WO 2021175046 A1 (BOE TECHNOLOGY GROUP CO., LTD.) 10 September 2021 (2021-09-10) entire document | 1-30 |
| A | WO 2022155969 A1 (BOE TECHNOLOGY GROUP CO., LTD.) 28 July 2022 (2022-07-28) entire document | 1-30 |

Form PCT/ISA/210 (second sheet) (July 2022)

## INTERNATIONAL SEARCH REPORT
### Information on patent family members

International application No.

**PCT/CN2023/130618**

| Patent document cited in search report | | | Publication date (day/month/year) | Patent family member(s) | | | Publication date (day/month/year) |
|---|---|---|---|---|---|---|---|
| CN | 115951506 | A | 11 April 2023 | None | | | |
| CN | 103945203 | A | 23 July 2014 | US | 2015181202 | A1 | 25 June 2015 |
| | | | | US | 9699443 | B2 | 04 July 2017 |
| | | | | DE | 102014109602 | A1 | 25 June 2015 |
| | | | | DE | 102014109602 | B4 | 03 August 2023 |
| CN | 107942525 | A | 20 April 2018 | None | | | |
| CN | 114902125 | A | 12 August 2022 | None | | | |
| CN | 115220241 | A | 21 October 2022 | None | | | |
| CN | 216249824 | U | 08 April 2022 | None | | | |
| WO | 2021175046 | A1 | 10 September 2021 | None | | | |
| WO | 2022155969 | A1 | 28 July 2022 | EP | 4120006 | A1 | 18 January 2023 |
| | | | | EP | 4120006 | A4 | 21 June 2023 |
| | | | | US | 2023164302 | A1 | 25 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211601713